# EUROPEAN PATENT APPLICATION

(11) **EP 3 624 147 A1**
(43) Date of publication of application: **18.03.2020**
(21) Application number: 18887785.6
(22) Date of filing: 13.12.2018
(51) Int. Cl.: H01F 7/02

(54) **MAGNETIC FORCE CONTROL DEVICE AND MAGNETIC BODY HOLDING DEVICE USING SAME**

(30) Priority: 14.12.2017 KR 20170172440; 15.03.2018 KR 20180030500; 07.12.2018 KR 20180157060
(71) Applicant: Choi, Tae Kwang, Gwangmyeong-si, Gyeonggi-do 14330 (KR)
(72) Inventor: Choi, Tae Kwang, Gwangmyeong-si, Gyeonggi-do 14330 (KR)
(74) Representative: Fabry, Bernd
(86) International application number: PCT/KR2018/015863
(87) International publication number: WO 2019/117649

(57) **Abstract**

The present invention relates to a magnetic force control device for controlling a magnetic force on an interaction surface by controlling an arrangement state of a freely rotating permanent magnet by means of a coil, and a magnetic body holding device using the same. A magnetic force control device according to an exemplary embodiment of the present invention includes: a magnetic flow generating section configured to be freely rotatable to at least define a first arrangement state and a second arrangement state and including a permanent magnet; a magnetic flow section having at least one interaction surface and including at least one pole piece made of a magnetic material in which a magnetic flow is formed therein, the pole piece is disposed such that an effect of a magnetic flow from the magnetic flow generating section on the interaction surface is minimized when the magnetic flow generating section defines the first arrangement state, and the effect of the magnetic flow from the magnetic flow generating section on the interaction surface is maximized when the magnetic flow generating section defines the second arrangement state; and at least one coils wound around the pole piece. Magnetic characteristics of the interaction surface are changed by controlling the switching between the first arrangement state and the second arrangement state of the magnetic flow generating section by controlling a current applied to the coil.

## Description

### [Technical Field]

The present invention relates to a magnetic force control device and a magnetic body holding device using the same, and more particularly, to a magnetic force control device configured to control a magnetic force on an interaction surface by controlling an arrangement state of a freely rotating permanent magnet by means of a coil, and a magnetic body holding device using the same.

### [Background Art]

A magnetic body holding device, such as a permanent magnet workpiece holding device, is a device used to attach, by using a magnetic force, an attachment object made of a magnetic material such as iron. Recently, the magnetic body holding device is widely used as an internal device attached to a mold clamp for an injection machine, a mold clamp for a press device, a chuck for a machine tool, or the like.

Basically, the magnetic body holding device is configured to attach the attachment object, which is a magnetic body, to a holding surface by using a high magnetic force of a permanent magnet. In order to release the attachment object, a magnetic flow from the permanent magnet is controlled such that the magnetic flow is prevented from being formed on the holding surface, thereby separating the attachment object from the holding surface.

The present applicant has proposed a permanent magnet workpiece holding device configured to hold and release an object by changing a magnetic circuit by rotating a permanent magnet (see Patent Document 1). However, in the case of the permanent magnet workpiece holding device, because a motor rotates the permanent magnet, a large amount of force needs to be applied to the motor. As a result, usability of the permanent magnet workpiece holding device is not good, and the permanent magnet workpiece holding device does not come into practical use because a large amount of power is applied to the motor.

### (Patent Document 1)

Korean Patent No. 10-1131134 (Title of Invention: Permanent Magnet Workpiece Holding Device)

### [Disclosure]

### [Technical Problem]

An object to be achieved by the present invention is to provide a magnetic force control device configured to control a magnetic force on an interaction surface by controlling an arrangement state of a freely rotating permanent magnet by means of a coil, and a magnetic body holding device using the same.

Technical problems of the present invention are not limited to the aforementioned technical problems, and other technical problems, which are not mentioned above, may be clearly understood by those skilled in the art from the following descriptions.

### [Technical Solution]

A magnetic force control device according to an exemplary embodiment of the present invention includes: a magnetic flow generating section configured to be freely rotatable to at least define a first arrangement state and a second arrangement state and including a permanent magnet; a magnetic flow section having at least one interaction surface and including at least one pole piece made of a magnetic material in which a magnetic flow is formed therein, the pole piece is disposed such that an effect of a magnetic flow from the magnetic flow generating section on the interaction surface is minimized when the magnetic flow generating section defines the first arrangement state, and the effect of the magnetic flow from the magnetic flow generating section on the interaction surface is maximized when the magnetic flow generating section defines the second arrangement state; and at least one coils wound around the pole piece. Magnetic characteristics of the interaction surface are changed by controlling the switching between the first arrangement state and the second arrangement state of the magnetic flow generating section by controlling a current applied to the coil.

According to another aspect of the present invention, the two interaction surfaces are provided, and the magnetic flow section is configured such that any one of an N-pole surface and an S-pole surface of the magnetic flow generating section faces a first surface connected to any one of the interaction surfaces and the other surface of the magnetic flow generating section faces a second surface connected to the other of the interaction surfaces when the magnetic flow generating section defines the second arrangement state.

According to yet another aspect of the present invention, at least one of the N-pole surface and the S-pole surface of the magnetic flow generating section faces at least one separate pole piece when the magnetic flow generating section defines the first arrangement state.

According to yet another aspect of the present invention, the magnetic flow section is configured such that a magnetic flow path in which the magnetic flow from the permanent magnet circulates therein is formed when the magnetic flow generating section defines the first arrangement state.

According to yet another aspect of the present invention, the two interaction surfaces are provided, the magnetic flow section is configured such that any one of an N-pole surface and an S-pole surface of the magnetic flow generating section faces a first surface connected to any one of the interaction surfaces and the other surface of the magnetic flow generating section faces a second surface connected to the other of the interaction surfaces when the magnetic flow generating section defines the second arrangement state, and the magnetic flow section is configured such that any one of the N-pole surface and the S-pole surface of the magnetic flow generating section faces a third surface, the other surface of the magnetic flow generating section faces a fourth surface, and the third surface and the fourth surface are magnetically connected when the magnetic flow generating section defines the first arrangement state.

According to yet another aspect of the present invention, at least one of the coils is wound around the pole piece connected to the first surface and the pole piece connected to the second surface, and at least one of the coils is wound around the pole piece connected to the third surface and the fourth surface.

According to yet another aspect of the present invention, the pole piece is disposed such that the first arrangement state and the second arrangement state are switched as the magnetic flow generating section rotates by 90°.

According to yet another aspect of the present invention, the pole piece is disposed such that the first surface and the second surface are not connected to the third surface and the fourth surface.

According to yet another aspect of the present invention, the pole piece is disposed such that any one of the first surface and the second surface is connected to the third surface and the fourth surface and the other of the first surface and the second surface is not connected to the third surface and the fourth surface.

According to yet another aspect of the present invention, at least two magnetic flow generating sections are provided, and the magnetic flow section is configured such that magnetic flow paths are formed such that the magnetic flow from the permanent magnet circulates therein and the magnetic flow paths overlap each other at some of the pole pieces when all the magnetic flow generating sections define the first arrangement states.

According to yet another aspect of the present invention, at least two magnetic flow generating sections are provided, the magnetic flow section is configured such that magnetic flow paths are formed such that the magnetic flow from the permanent magnet circulates therein and the magnetic flow paths are not overlap each other when all of the magnetic flow generating sections define the first arrangement states, and the magnetic flow section is configured such that one of the magnetized interaction surfaces is shared by all of the magnetic flow generating sections when all of the magnetic flow generating sections define the second arrangement states.

According to yet another aspect of the present invention, at least two magnetic flow generating sections are provided, the magnetic flow section includes a connecting pole piece interposed between the magnetic flow generating sections, and a circulation pole piece configured to form, together with the connecting pole piece and the magnetic flow generating sections, a magnetic flow path such that the magnetic flow from the permanent magnets circulates therein when the magnetic flow generating sections define the first arrangement states, and the magnetic flow section includes at least two pole pieces having the interaction surfaces connected to the N-pole surface or the S-pole surface of the magnetic flow generating sections when the magnetic flow generating sections define the second arrangement states.

According to yet another aspect of the present invention, the magnetic flow generating section includes: the permanent magnet; an N-pole piece configured to be in contact with an N pole of the permanent magnet and made of a magnetic material in which a magnetic flow is formed; and an S-pole piece configured to be in contact with an S pole of the permanent magnet and made of a magnetic material in which a magnetic flow is formed, and the magnetic flow from the permanent magnet is transferred to the magnetic flow section through the N-pole piece and the S-pole piece.

According to yet another aspect of the present invention, the magnetic flow generating section is configured only by the permanent magnet.

A magnetic force control device according to another exemplary embodiment of the present invention includes: a magnetic flow generating section configured to be freely rotatable to at least define a first arrangement state and a second arrangement state and including a permanent magnet; a magnetic flow section having at least one interaction surface and including a main permanent magnet and a at least one pole piece made of a magnetic material in which a magnetic flow is formed therein, the pole piece and the main permanent magnet being disposed such that an effect of a magnetic flow from the main permanent magnet on the interaction surface is minimized as a closed loop is formed between the magnetic flow generating section and the main permanent magnet when the magnetic flow generating section defines the first arrangement state and the effect of the magnetic flow generating section on the main permanent magnet is minimized when the magnetic flow generating section defines the second arrangement state; and at least one coil wound around the pole piece. Magnetic characteristics of the interaction surface are changed by controlling the switching between the first arrangement state and the second arrangement state of the magnetic flow generating section by controlling a current applied to the coil.

According to another aspect of the present invention, the pole piece is disposed such that an internal circulation magnetic path is formed when the magnetic flow generating section defines the second arrangement state.

According to yet another aspect of the present invention, at least one coil is disposed on the closed loop formed when the magnetic flow generating section defines the first arrangement state, and at least one coil is disposed on the internal circulation magnetic path formed when the magnetic flow generating section defines the second arrangement state.

According to yet another aspect of the present invention, the magnetic flow generating section is configured to define a third arrangement state in a direction opposite to a direction of the first arrangement state by controlling the current applied to the coil.

According to yet another aspect of the present invention, the magnetic flow section includes: a first pole piece having an interaction surface and made of a magnetic material in which a magnetic flow is formed; a second pole piece having an interaction surface and made of a magnetic material in which a magnetic flow is formed; a third pole piece having an interaction surface and made of a magnetic material in which a magnetic flow is formed; and a fourth pole piece having an interaction surface and made of a magnetic material in which a magnetic flow is formed. The main permanent magnet is disposed such that any one of an N pole and an S pole is in contact with the first pole piece and the other magnetic pole is in contact with the second pole piece, the first pole piece and the second pole piece are disposed to be magnetically connected by the magnetic flow generating section when the magnetic flow generating section is in the first arrangement state, the third pole piece and the fourth pole piece are disposed to be magnetically connected by the magnetic flow generating section when the magnetic flow generating section is in the second arrangement state, and the coils are disposed to be wound around at least one of the first pole piece and the second pole piece and wound around at least one of the third pole piece and the fourth pole piece.

A magnetic body holding device according to an exemplary embodiment of the present invention includes the configuration of the magnetic force control device.

### [Advantageous Effects]

According to the magnetic force control device according to the present invention, even though a small amount of current is applied, the magnetic flow generating section including the permanent magnet is rotated, and the magnetic flow is changed, thereby easily controlling a degree of magnetization of the interaction surface.

In addition, the magnetic body holding device using the magnetic force control device requires a small amount of current only when holding or releasing an object, and thus may achieve low power consumption. The magnetic body holding device is excellent in stability because a holding or releasing state is maintained even in an emergency in which a supply of power is cut off.

### [Description of Drawings]

FIGS. 1A to 1D are schematic cross-sectional views illustrating a magnetic force control device according to one exemplary embodiment of the present invention. In addition, FIG. 1E is a view illustrating another exemplary embodiment of a magnetic flow generating section in FIGS. 1A to 1D.
FIG. 2 is a schematic front view and a cross-sectional view illustrating a magnetic force control device according to another exemplary embodiment of the present invention.
FIG. 3 is a schematic cross-sectional view illustrating a magnetic force control device according to yet another exemplary embodiment of the present invention.
FIG. 4 is a schematic cross-sectional view illustrating a magnetic force control device according to yet another exemplary embodiment of the present invention.
FIG. 5 is a schematic cross-sectional view illustrating a magnetic force control device according to yet another exemplary embodiment of the present invention.
FIG. 6 is a schematic cross-sectional view illustrating a magnetic force control device according to yet another exemplary embodiment of the present invention.
FIG. 7 is a schematic cross-sectional view illustrating a magnetic force control device according to yet another exemplary embodiment of the present invention.
FIG. 8 is a schematic cross-sectional view illustrating a magnetic force control device according to yet another exemplary embodiment of the present invention.
FIG. 9 is a schematic cross-sectional view illustrating a magnetic force control device according to yet another exemplary embodiment of the present invention.
FIG. 10 is a schematic cross-sectional view illustrating a magnetic force control device according to yet another exemplary embodiment of the present invention.
FIG. 11 is a schematic cross-sectional view illustrating a magnetic force control device according to yet another exemplary embodiment of the present invention.
FIG. 12 is a schematic front view and a cross-sectional view illustrating a magnetic force control device according to yet another exemplary embodiment of the present invention.
FIGS. 13A to 13F are schematic cross-sectional views illustrating a magnetic force control device according to yet another exemplary embodiment of the present invention.
FIG. 14 is a schematic cross-sectional view illustrating a magnetic force control device according to yet another exemplary embodiment of the present invention.
FIG. 15A to 15E are schematic front views and cross-sectional views illustrating a magnetic force control device according to yet another exemplary embodiment of the present invention.
FIGS. 16A to 16F are schematic cross-sectional views illustrating a magnetic force control device according to yet another exemplary embodiment of the present invention.
FIG. 17A to 17C are schematic cross-sectional views illustrating a magnetic force control device according to yet another exemplary embodiment of the present invention.
FIGS. 18A to 18C are schematic cross-sectional views illustrating a magnetic force control device according to yet another exemplary embodiment of the present invention.
FIGS. 19A to 19C are schematic cross-sectional views illustrating a magnetic force control device according to yet another exemplary embodiment of the present invention.
FIG. 20 is a schematic front view and a cross-sectional view illustrating a magnetic force control device according to yet another exemplary embodiment of the present invention.
FIG. 21 is a schematic front view and a cross-sectional view illustrating a magnetic force control device according to yet another exemplary embodiment of the present invention.
FIG. 22 is a schematic front view and a cross-sectional view illustrating a magnetic force control device according to yet another exemplary embodiment of the present invention.
FIG. 23 is a schematic front view and a cross-sectional view illustrating a magnetic force control device according to yet another exemplary embodiment of the present invention.

### [Modes of the Invention]

Advantages and features of the present invention and methods of achieving the advantages and features will be clear with reference to exemplary embodiments described in detail below together with the accompanying drawings. However, the present invention is not limited to the exemplary embodiments disclosed herein but will be implemented in various forms. The exemplary embodiments of the present invention are provided so that the present invention is completely disclosed, and a person with ordinary skill in the art can fully understand the scope of the present invention. The present invention will be defined only by the scope of the appended claims.

When an element or layer is referred to as being "on" another element or layer, it can be directly on the other element or layer or intervening elements or layers may also be present.

Terms "first", "second", and the like may be used to describe various constituent elements, but the constituent elements are of course not limited by these terms. These terms are merely used to distinguish one constituent element from another constituent element. Therefore, the first constituent element mentioned hereinafter may of course be the second constituent element within the technical spirit of the present invention.

Throughout the specification, the same reference numerals denote the same constituent elements.

The size and thickness of each component illustrated in the drawings are shown for ease of description, but the present invention is not necessarily limited to the size and thickness of the illustrated component.

Respective features of several exemplary embodiments of the present invention may be partially or entirely coupled to or combined with each other, and as sufficiently appreciated by those skilled in the art, various technical cooperation and operations may be carried out, and the respective exemplary embodiments may be implemented independently of each other or implemented together correlatively.

Hereinafter, exemplary embodiments of a magnetic force control device according to the present invention will be described with reference to the accompanying drawings.

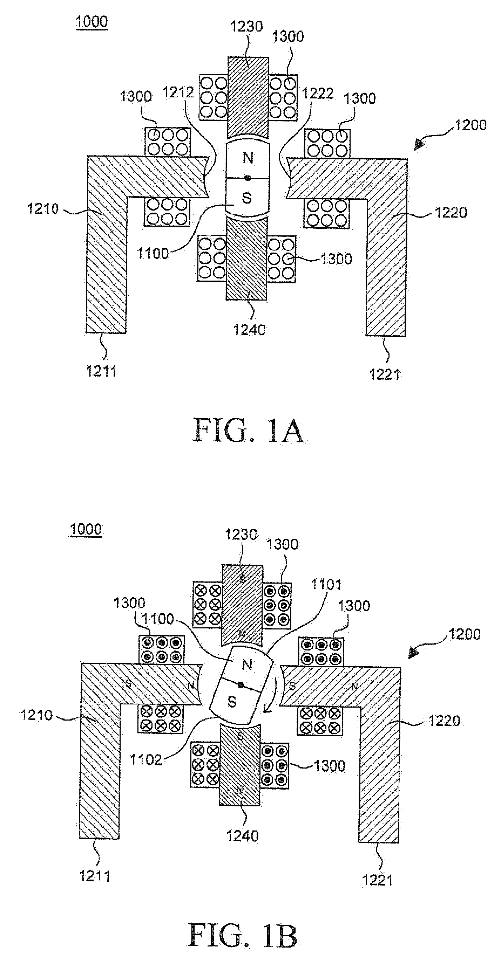

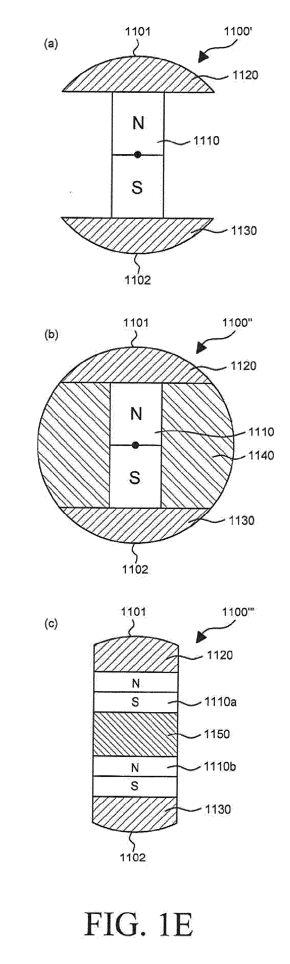

FIGS. 1A to 1D are schematic cross-sectional views illustrating a magnetic force control device according to one exemplary embodiment of the present invention. In addition, FIG. 1E is a view illustrating another exemplary embodiment of a magnetic flow generating section in FIGS. 1A to 1D.

Referring to FIGS. 1A to 1D, a magnetic force control device 1000 according to the present exemplary embodiment includes a magnetic flow generating section 1100, a magnetic flow section 1200, and coils 1300.

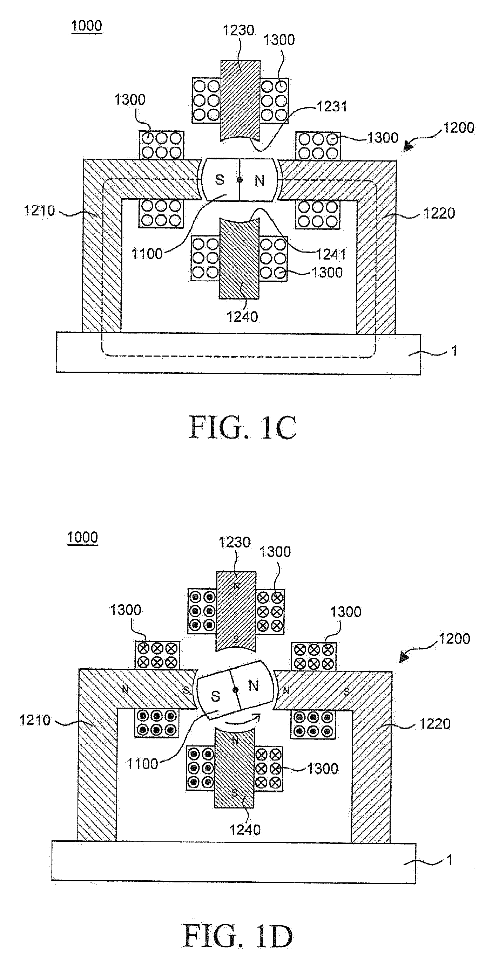

The magnetic flow generating section 1100 is configured to be freely rotatable. The magnetic flow generating section 1100 is configured to at least define a first arrangement state (arrangement state in FIG. 1A) and a second arrangement state (arrangement state in FIG. 1C).

The magnetic flow generating section 1100 is configured to be freely rotatable, and a frictional force needs to be low. The magnetic flow generating section 1100 may be configured as a permanent magnet as described in the present exemplary embodiment described with reference to FIGS. 1A to 1D. However, the magnetic flow generating section 1100 may be configured by a combination of the permanent magnet and a ferromagnetic material such as iron.

In the present exemplary embodiment, an example in which an N-pole surface 1101 and an S-pole surface 1102 of the magnetic flow generating section 1100 are not continuous is described. However, the magnetic flow generating section 1100 may have a cylindrical shape having a circular cross section.

Meanwhile, as illustrated in FIG. 1E (a), the magnetic flow generating section 1100' may include a permanent magnet 1110, an N-pole piece 1120, and an S-pole piece 1130. The N-pole piece 1120 is in contact with an N pole of the permanent magnet 1110, and the N-pole piece 1120 is made of a magnetic material, such as iron, in which a magnetic flow may be formed. The S-pole piece 1130 is in contact with an S pole of the permanent magnet 1110, and the S-pole piece 1130 is made of a magnetic material, such as iron, in which a magnetic flow may be formed. With this configuration, the magnetic flow from the permanent magnet 1110 is transmitted to the magnetic flow section 1200 through the N-pole piece 1120 and the S-pole piece 1130. This configuration may prevent damage to the permanent magnet 1110 and thus be advantageous to a large-sized device that requires a high magnetic force.

Further, as illustrated in FIG. 1E(b), a magnetic flow generating section 1100" may further include a protective body 1140 made of a non-magnetic material in addition to the permanent magnet 1110, the N-pole piece 1120, and the S-pole piece 1130. The protective body 1140 may be made of a non-magnetic material such as rubber or aluminum and configured to protect the permanent magnet 1110 from the outside. With the protective body 1140, the magnetic flow generating section 1100" may entirely have a cylindrical shape.

In addition, as illustrated in FIG. 1E(c), a magnetic flow generating section 1100''' may include two permanent magnets 1100a and 1100b, and an intermediate pole piece 1150 made of a magnetic material such as iron and provided between the two permanent magnets 1100a and 1100b.

In addition, each of the magnetic flow generating sections 1100, 1100', 1100", and 1100''' may have various shapes to have the N-pole surface 1101 and the S-pole surface 1102.

The magnetic flow section 1200 includes at least one pole piece made of a magnetic material such as iron in which a magnetic flow may be formed. The magnetic flow section 1200 defines a path of a magnetic flow by arranging at least one pole piece.

In the present exemplary embodiment, the magnetic flow section 1200 includes a first pole piece 1210, a second pole piece 1220, a third pole piece 1230, and a fourth pole piece 1240. Each of the pole pieces 1210, 1220, 1230, and 1240 may be made of a ferromagnetic material such as iron.

The first pole piece 1210 has an interaction surface 1211, and the second pole piece 1220 has an interaction surface 1221. The number of interaction surfaces 1211 and 1221 is two in the present exemplary embodiment, but one interaction surface or three or more interaction surfaces may be provided. The shape and number of the interaction surfaces 1211 and 1221 may be freely set based on the intended use.

In the case in which the magnetic flow generating section 1100 defines the first arrangement state (see FIG. 1A), the pole pieces 1210, 1220, 1230, and 1240 are disposed such that an effect of the magnetic flow from the magnetic flow generating section 1100 on the interaction surfaces 1211 and 1221 is minimized. In the case in which the magnetic flow generating section 1100 defines the second arrangement state (see FIG. 1C), the pole pieces 1210, 1220, 1230, and 1240 are disposed such that the effect of the magnetic flow from the magnetic flow generating section 1100 on the interaction surfaces 1211 and 1221 is maximized.

In the case in which the magnetic flow generating section 1100 defines the second arrangement state, the first pole piece 1210 has a first surface 1212 facing the N pole or the S pole. In the case in which the magnetic flow generating section 1100 defines the second arrangement state, the second pole piece 1220 has a second surface 1222 facing the N pole or the S pole. Referring to FIG. 1C, in the present exemplary embodiment, the example in which in the case in which the magnetic flow generating section 1100 defines the second arrangement state, the N pole faces the second surface 1222, and the S pole faces the first surface 1212 is described. However, the S pole may face the second surface 1222, and the N pole may face the first surface 1212.

The first surface 1212 and the interaction surface 1211 are connected with the first pole piece 1210, and the second surface 1222 and the interaction surface 1221 are connected with the second pole piece 1220.

Each of the third pole piece 1230 and the fourth pole piece 1240 is made of a magnetic material such as iron. The third pole piece 1230 and the fourth pole piece 1240 are positioned to be separated from each other. In the case in which the magnetic flow generating section 1100 defines the first arrangement state, the third pole piece 1230 has a third surface 1231 facing at least one of the N pole and the S pole, and the fourth pole piece 1240 has a fourth surface 1241 facing the other of the N pole and the S pole.

Referring to FIG. 1A, in the present exemplary embodiment, the example in which in the case in which the magnetic flow generating section 1100 defines the first arrangement state, the N pole faces the third surface 1231, and the S pole faces the fourth surface 1241 is described. However, the S pole may face the third surface 1231, and the N pole may face the fourth surface 1241.

Meanwhile, the magnetic flow section 1200 may be configured such that the switching between the first arrangement state and the second arrangement state is performed by rotating the magnetic flow generating section 1100 by 90°.

In the present exemplary embodiment, the example in which both of the third pole piece 1230 and the fourth pole piece 1240 are provided is described. However, only one of the third pole piece 1230 and the fourth pole piece 1240 may be provided. The reason is that the first arrangement state of the magnetic flow generating section 1100 may be achieved only by a single separate pole piece.

At least one coil 1300 is wound around each of the pole pieces 1210, 1220, 1230, and 1240. In the present exemplary embodiment, each of the coils 1300 is wound around each of the first pole piece 1210, the second pole piece 1220, the third pole piece 1230, and the fourth pole piece 1240.

The coil 1300 may be disposed in the vicinity of the first to fourth surfaces 1212, 1222, 1231, and 1241 to improve control efficiency.

When the arrangement state of the magnetic flow generating section 1100 is switched by controlling the current applied to the coils 1300, the magnetic characteristics of the interaction surfaces 1211 and 1221 are changed.

In this regard, a specific control method will be described.

Referring to FIG. 1A, the magnetic flow generating section 1100 defines the first arrangement state. The first arrangement state may be maintained by an attractive force since the third pole piece 1230 and the fourth pole piece 1240 are made of a ferromagnetic material. In this case, the first arrangement state of the magnetic flow generating section 1100 is maintained even though no current is applied to the coils 1300 wound around the third pole piece 1230 and the fourth pole piece 1240.

In this case, the magnetic force of the interaction surfaces 1211 and 1221 is minimized. Therefore, no magnetic force is applied to the magnetic materials in the vicinity of the interaction surfaces 1211 and 1221. Further, because the almost entire magnetic flow from the magnetic flow generating section 1100 is directed toward the third pole piece 1230 and the fourth pole piece 1240, almost no residual magnetic flow is formed on the interaction surfaces 1211 and 1221.

Meanwhile, although described above, the arrangement state in which the magnetic flow generating section 1100 is arranged such that the N pole faces the fourth surface 1241 and the S pole faces the third surface 1231 is also defined as the first arrangement state.

As illustrated in FIG. 1B, when the current is applied to the respective coils 1300, the third surface 1231 is magnetized to have the N pole, and the fourth surface 1241 is magnetized to have the S pole, such that the magnetic flow generating section 1100 is rotated. When the current is applied to the coils 1300, the first surface 1212 is magnetized to have the N pole, and the second surface 1222 is magnetized to have the S pole, such that the magnetic flow generating section 1100 is rotated counterclockwise. Therefore, as illustrated in FIG. 1C, the N pole of the magnetic flow generating section 1100 faces the second surface 1222, and the S pole of the magnetic flow generating section 1100 faces the first surface 1212. Thereafter, as illustrated in FIG. 1C, the second arrangement state of the magnetic flow generating section 1100 is fixed even though the current applied to the coils 1300 is cut off.

As the magnetic flow generating section 1100 switches to the second arrangement state, the interaction surfaces 1211 and 1221 are magnetized to generate the magnetic force with respect to the outside magnetic body. Therefore, when the magnetic body 1 is present outside the interaction surfaces 1211 and 1221, the magnetic flow is formed as indicated by the dotted line in FIG. 1C passing through the magnetic body 1, such that the magnetic body 1 may be held. In this way, the magnetic force control device 1000 according to the present exemplary embodiment may serve as a magnetic body holding device.

Meanwhile, unlike the arrangement state illustrated in FIG. 1C, the second arrangement state of the magnetic flow generating section 1100 may be configured such that the N pole faces the first surface 1212 and the S pole faces the second surface 1222. The second arrangement state may be achieved by applying the current, in the opposite directions, to the coil 1300 wound around the first pole piece 1210 and the coil 1300 wound around the second pole piece 1220, as illustrated in FIG. 1B.

If each of the interaction surfaces 1211 and 1221 is magnetized to have any of the N pole and the S pole, no current may be applied to the coils 1300 wound around the first and second pole pieces 1210 and 1220 when the first arrangement state is switched to the second arrangement state.

Once the magnetic flow passing through the outside magnetic body 1 is formed as illustrated in FIG. 1C, the holding state is maintained even though the current applied to the coils 1300 is cut off. Therefore, the current is not consumed to maintain the holding state.

In order to eliminate the magnetism of the interaction surfaces 1211 and 1221, the current is applied to the coils 1300, as illustrated in FIG. 1D. The current is at least applied to the coils 1300 so that the first surface 1212 has the S pole and the second surface 1222 has the N pole. Therefore, the magnetic flow generating section 1100 begins to rotate.

Optionally, as illustrated in FIG. 1D, the third and fourth surfaces 1231 and 1241 may be magnetized by applying the current to the coils 1300 wound around the third and fourth pole pieces 1230 and 1240. Specifically, the magnetic flow generating section 1100 may switch to the first arrangement state even though the third and fourth surfaces 1231 and 1241 are not magnetized. Therefore, no current may be applied to the coils 1300 wound around the third and fourth pole pieces 1230 and 1240 to switch to the first arrangement state.

However, in order to position a particular magnetic pole at a particular position, the current needs to be applied to the coils 1300 wound around the third and fourth pole pieces 1230 and 1240. FIG. 1D exemplarily illustrates a state in which the current is applied to the coils 1300 wound around the third and fourth pole pieces 1230 and 1240 so that the magnetic flow generating section 1100 switch to the state illustrated in FIG. 1A.

Therefore, the magnetic flow generating section 1100 rotate to switch to the state illustrated in FIG. 1A, and the magnetization of the interaction surfaces 1211 and 1221 is minimized, such that the magnetic force cannot reach the magnetic body 1 positioned outside the interaction surfaces 1211 and 1221. That is, the magnetic body 1 is released from the magnetic force control device 1000.

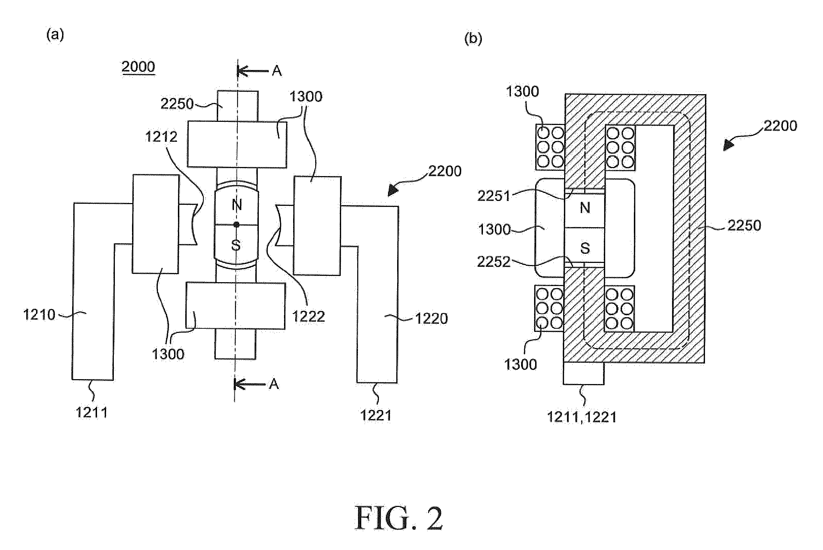

FIG. 2 is a schematic front view and a cross-sectional view illustrating a magnetic force control device according to another exemplary embodiment of the present invention.

FIG. 2A is a front view illustrating a magnetic force control device 2000 according to the present exemplary embodiment, and FIG. 2B is a cross-sectional view taken along line A-A in FIG. 2A.

Referring to FIG. 2, the magnetic force control device 2000 according to the present exemplary embodiment just differs from the magnetic force control device 1000 illustrated in FIG. 1A to 1D in that the third pole piece 1230 and the fourth pole piece 1240 are connected to each other, but there is no difference in respect to the other configurations. Therefore, only the difference will be specifically described to avoid the repeated description.

In the magnetic force control device 2000 according to the present exemplary embodiment, a magnetic flow section 2200 is configured to define a magnetic flow path formed such that a magnetic flow from the magnetic flow generating section 1100 circulates inside the magnetic flow section 2200, as indicated by the dotted line in FIG. 2B, in the case in which the magnetic flow generating section 1100 defines the first arrangement state (arrangement state illustrated in FIG. 2).

Specifically, a circulation pole piece 2250 is provided such that the third surface 2251 and the fourth surface 2252 each facing the N-pole surface or the S-pole surface are magnetically connected to each other in the case in which the magnetic flow generating section 1100 defines the first arrangement state, as illustrated in FIG. 2. Therefore, when the magnetic flow generating section 1100 defines the second arrangement state, the magnetic flow generated from the magnetic flow generating section 1100 defines a closed loop through the circulation pole piece 2250, as indicated by the dotted line.

For reference, the circulation pole piece 2250 according to the present exemplary embodiment may be configured by connecting the third pole piece 1230 and the fourth pole piece 1240 in FIGS. 1A to 1D.

At least one coil 1300 is disposed on the first pole piece 1210 so as to be adjacent to the first surface 1212. In addition, at least one coil 1300 is disposed on the second pole piece 1220 so as to be adjacent to the second surface 1222. However, the coil 1300 may be wound around only one of the first pole piece 1210 and the second pole piece 1220.

In addition, at least one coil 1300 is wound around the circulation pole piece 2250. In the present exemplary embodiment, the example in which the two coils 1300 are wound around the circulation pole piece 2250 is described, but only one coil may be provided on the circulation pole piece 2250. The coils 1300 wound around the circulation pole piece 2250 may be disposed to be adjacent to the third surface 2251 or the fourth surface 2252 to immediately provide a rotational force to the magnetic flow generating section 1100.

Because the control method performed based on the switching of the arrangement state of the magnetic flow generating section 1100 is identical to the control method described with reference to FIGS. 1A to 1D, a detailed description thereof will be omitted.

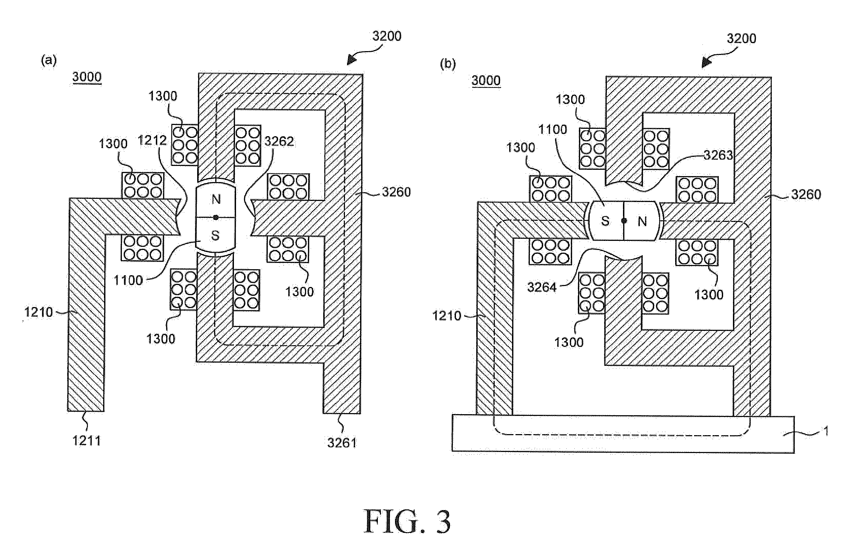

FIG. 3 is a schematic cross-sectional view illustrating a magnetic force control device according to yet another exemplary embodiment of the present invention. Specifically, FIG. 3A illustrates a state in which the magnetic flow generating section 1100 defines the first arrangement state, and FIG. 3B illustrates a state in which the magnetic flow generating section 1100 defines the second arrangement state.

Like the magnetic force control device 2000, the magnetic force control device 3000 according to the present exemplary embodiment also has a magnetic flow section 3200 to form a magnetic flow path so that the magnetic flow from the magnetic flow generating section 1100 circulates inside the magnetic flow section 3200.

The magnetic flow section 3200 includes a pole piece unit 3260 in addition to the first pole piece 1210. The pole piece unit 3260 is configured by integrating the circulation pole piece 2250 and the second pole piece 1220 illustrated in FIG. 2.

The pole piece unit 3260 has a second surface 3262, a third surface 3263, and a fourth surface 3264. As illustrated in FIG. 3A, in the case in which the magnetic flow generating section 1100 defines the first arrangement state, the N pole or the S pole of the magnetic flow generating section 1100 faces the third surface 3263 and the fourth surface 3264, and the third surface 3263 and the fourth surface 3264 are magnetically connected to each other, such that the magnetic flow circulating inside the magnetic force control device, as indicated by the dotted line.

On the contrary, as illustrated in FIG. 3B, in the case in which the magnetic flow generating section 1100 defines the second arrangement state, the N pole or the S pole of the magnetic flow generating section 1100 is configured to face the first surface 1212 or the second surface 3262, the first surface 1212 is magnetically connected to the interaction surface 1211, and the second surface 3262 is magnetically connected to the interaction surface 3261, such that the interaction surfaces 1211 and 3261 may be magnetized. That is, as illustrated in FIG. 3B, the magnetic body 1 may be held as the magnetic flow passing through the outside magnetic body 1 is formed as indicated by the dotted line.

Any one of the third surface 3263 and the fourth surface 3264 may be omitted from the pole piece unit 3260. In this case, the coil 1300, which corresponds to the omitted surface, may also be omitted.

As illustrated in FIG. 3, the pole piece unit 3260 may be integrally. However, the pole piece unit 3260 may be formed by combining multiple pole pieces.

In addition, in the present exemplary embodiment, the example in which four coils 1300 are disposed to be adjacent to the first to fourth surfaces 1212, 3262, 3263, and 3264 is exemplarily described. However, one coil may be provided to be adjacent to the third surface 3263, and only coil may be disposed to be adjacent to the second surface 3262. The number of disposed coils 1300 may be reduced if the arrangement state of the magnetic flow generating section 1100 may be switched.

Because the control method performed based on the switching of the arrangement state of the magnetic flow generating section 1100 is identical to the control method described with reference to FIGS. 1A to 1D, a detailed description thereof will be omitted.

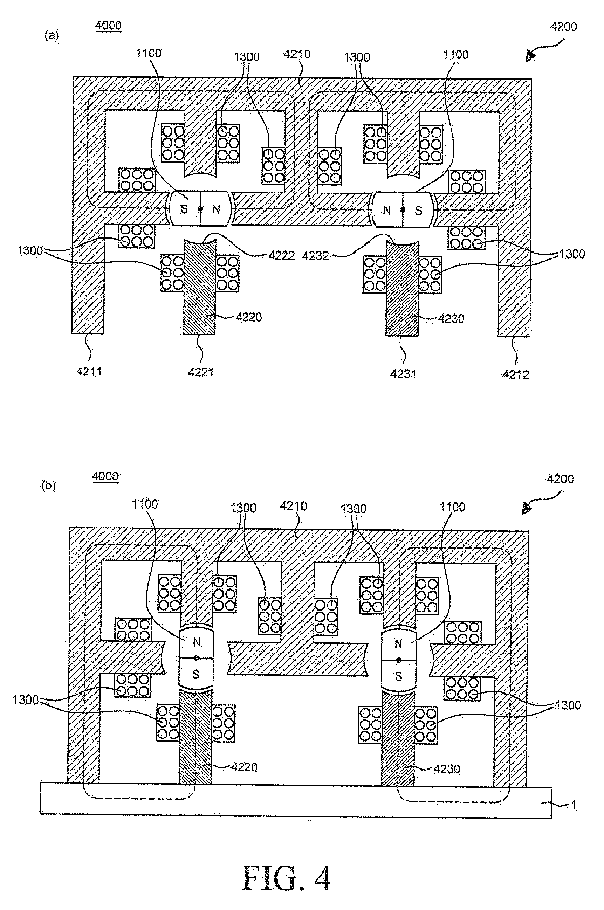

FIG. 4 is a schematic cross-sectional view illustrating a magnetic force control device according to yet another exemplary embodiment of the present invention. Specifically, FIG. 4A illustrates a state in which the magnetic flow generating sections 1100 define the first arrangement states, and FIG. 4B illustrates a state in which the magnetic flow generating sections 1100 define the second arrangement states.

A magnetic force control device 4000 according to the present exemplary embodiment includes at least two magnetic flow generating sections 1100.

The magnetic flow section 4200 includes a pole piece unit 4210, a first pole piece 4220, and a second pole piece 4230.

The first pole piece 4220 has a first surface 4222 that faces an N-pole surface or an S-pole surface of the magnetic flow generating section 1100 in the case in which the magnetic flow generating section 1100 defines the second arrangement state, as illustrated in FIG. 4B. The first surface 4222 is magnetically connected to an interaction surface 4221.

The second pole piece 4230 has a second surface 4232 that faces the N-pole surface or the S-pole surface of the magnetic flow generating section 1100 in the case in which the magnetic flow generating section 1100 defines the second arrangement state, as illustrated in FIG. 4B. The second surface 4232 is magnetically connected to an interaction surface 4231.

The pole piece unit 4210 has interaction surfaces 4211 and 4212. As illustrated in FIG. 4A, in the case in which all of the magnetic flow generating sections 1100 define the first arrangement states, magnetic flow paths are formed such that the magnetic flow from the magnetic flow generating section 1100 circulates inside the magnetic force control device, and the magnetic flow paths are configured to overlap each other at some of the pole pieces.

Because the control method performed based on the switching of the arrangement state of the magnetic flow generating section 1100 is identical to the control method described with reference to FIGS. 1A to 1D, a detailed description thereof will be omitted.

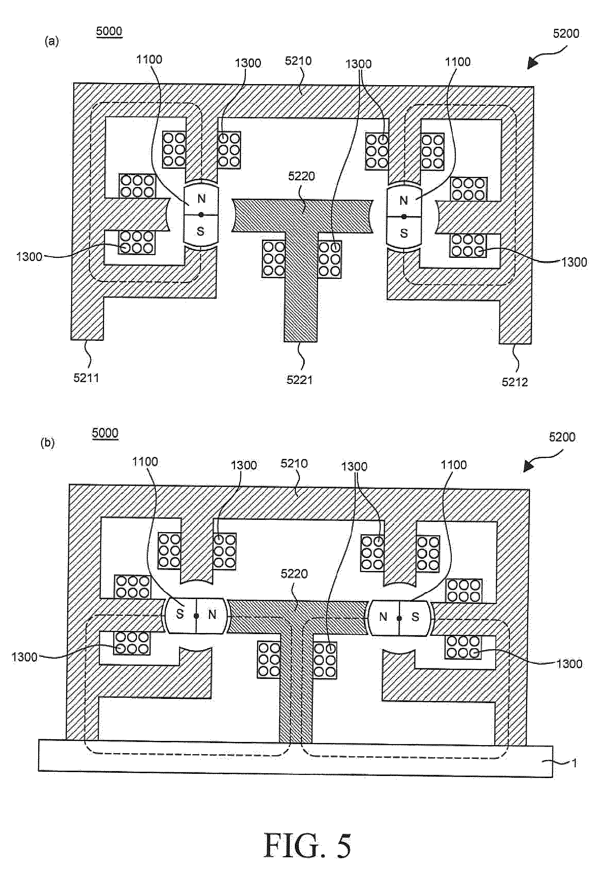

FIG. 5 is a schematic cross-sectional view illustrating a magnetic force control device according to yet another exemplary embodiment of the present invention. Specifically, FIG. 5A illustrates a state in which the magnetic flow generating sections 1100 define the first arrangement states, and FIG. 5B illustrates a state in which the magnetic flow generating sections 1100 define the second arrangement states.

A magnetic force control device 5000 according to the present exemplary embodiment includes at least two magnetic flow generating sections 1100.

The magnetic force control device 5000 is configured by expanding the magnetic force control device 3000 in FIG. 3 toward both sides and has the same operational principle.

Specifically, as illustrated in FIG. 5A, in the case in which all of the magnetic flow generating sections 1100 define the first arrangement states, magnetic flow paths are formed such that the magnetic flow from the magnetic flow generating section 1100 circulates inside the magnetic force control device, and a magnetic flow section 5200 is configured such that the magnetic flow paths do not overlap each other.

The magnetic flow section 5200 includes a pole piece unit 5210 and a connecting pole piece 5220.

The pole piece unit 5210 has interaction surfaces 5211 and 5212, and as illustrated in FIG. 5A, in the case in which the magnetic flow generating sections 1100 define the first arrangement states, the separate magnetic flow paths are formed, as indicated by the dotted lines.

The connecting pole piece 5220 has an interaction surface 5221. As illustrated in FIG. 5B, in the case in which all the magnetic flow generating sections 1100 define the second arrangement states, one of the magnetized interaction surfaces (i.e., reference numeral 5221) is shared by all of the magnetic flow generating sections 1100.

Because the other configurations are identical to those of the magnetic force control device 3000 in FIG. 3, a detailed description thereof will be omitted.

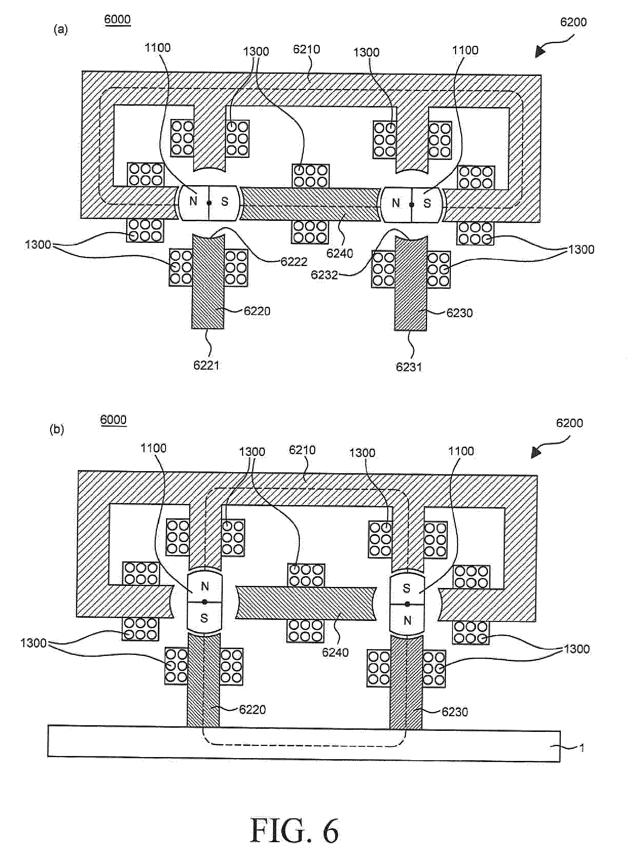

FIG. 6 is a schematic cross-sectional view illustrating a magnetic force control device according to yet another exemplary embodiment of the present invention. Specifically, FIG. 6A illustrates a state in which the magnetic flow generating sections 1100 define the first arrangement states, and FIG. 6B illustrates a state in which the magnetic flow generating sections 1100 define the second arrangement states.

A magnetic force control device 6000 according to the present exemplary embodiment includes at least two magnetic flow generating sections 1100.

A magnetic flow section 6200 includes a circulation pole piece 6210, a first pole piece 6220, a second pole piece 6230, and a connecting pole piece 6240.

The first pole piece 6220 has a first surface 6222 that faces the N-pole surface or the S-pole surface of the magnetic flow generating section 1100 in the case in which the magnetic flow generating section 1100 defines the second arrangement state, as illustrated in FIG. 6B. The first surface 6222 is magnetically connected to an interaction surface 6221.

The second pole piece 6230 has a second surface 6232 that faces the N-pole surface or the S-pole surface of the magnetic flow generating section 1100 in the case in which the magnetic flow generating section 1100 defines the second arrangement state, as illustrated in FIG. 6B. The second surface 6232 is magnetically connected to an interaction surface 6231.

The connecting pole piece 6240 is interposed between the magnetic flow generating sections 1100. In the case in which the magnetic flow generating sections 1100 define the first arrangement states, the connecting pole piece 6240 faces the N pole or the S pole of the magnetic flow generating section 1100.

The circulation pole piece 6210 is configured to form, together with the connecting pole piece 6240 and the magnetic flow generating sections 1100, a magnetic flow path so that the magnetic flow from the magnetic flow generating section 1100 circulates inside the magnetic force control device in the case in which the magnetic flow generating sections 1100 define the first arrangement states (as illustrated in FIG. 6A).

In the case in which the magnetic flow generating sections 1100 define the first arrangement states, the N-pole surface and the S-pole surface face the connecting pole piece 6240, as illustrated in FIG. 6A. In addition, the coils 1300 needs to be controlled such that the magnetic flow generating sections 1100 are disposed so that the magnetic poles facing the circulation pole piece 6210 are different from each other in order to form the magnetic flow, as indicated by the dotted line in FIG. 6B, in the case in which the magnetic flow generating section 1100 defines the second arrangement state.

Because the control method performed based on the switching of the arrangement state of the magnetic flow generating section 1100 is identical to the control method described with reference to FIGS. 1A to 1D, a detailed description thereof will be omitted.

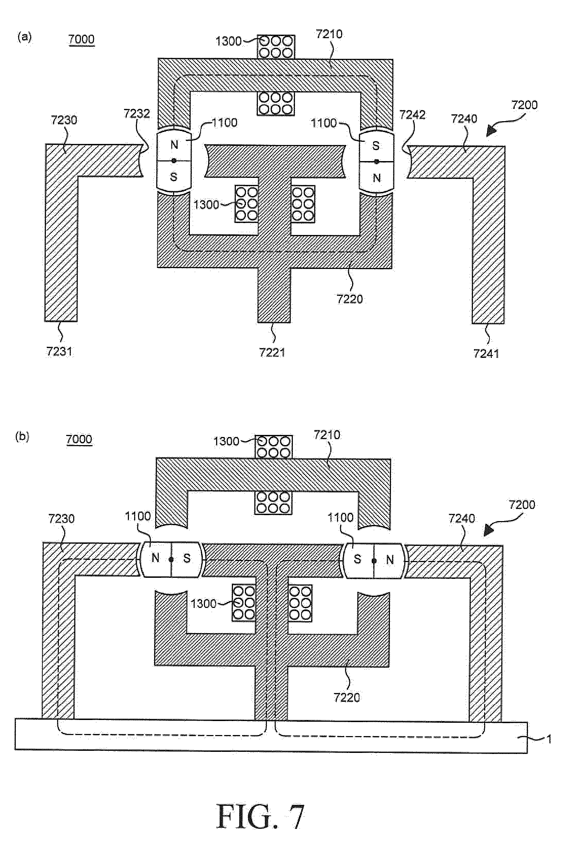

FIG. 7 is a schematic cross-sectional view illustrating a magnetic force control device according to yet another exemplary embodiment of the present invention. Specifically, FIG. 7A illustrates a state in which the magnetic flow generating sections 1100 define the first arrangement states, and FIG. 7B illustrates a state in which the magnetic flow generating sections 1100 define the second arrangement states.

A magnetic force control device 7000 according to the present exemplary embodiment includes at least two magnetic flow generating sections 1100.

A magnetic flow section 7200 includes a first circulation pole piece 7210, a second circulation pole piece 7220, a first pole piece 7230, and a second pole piece 7240.

The first pole piece 7230 has a first surface 7232 that faces the N-pole surface or the S-pole surface of the magnetic flow generating section 1100 in the case in which the magnetic flow generating section 1100 defines the second arrangement state, as illustrated in FIG. 7B. The first surface 7232 is magnetically connected to an interaction surface 7231.

The second pole piece 7240 has a second surface 7242 that faces the N-pole surface or the S-pole surface of the magnetic flow generating section 1100 in the case in which the magnetic flow generating section 1100 defines the second arrangement state, as illustrated in FIG. 7B. The second surface 7242 is magnetically connected to an interaction surface 7241.

The first circulation pole piece 7210 and the second circulation pole piece 7220 are configured to form a magnetic flow path such that the magnetic flow from the magnetic flow generating sections 1100 circulates inside the magnetic force control device in the case in which the magnetic flow generating sections 1100 define the first arrangement states (as illustrated in FIG. 7A).

The second circulation pole piece 7220 may have an interaction surface 7221, and the interaction surface 7221 may serve as an additional interaction surface in addition to the interaction surface 7231 of the first pole piece 7230 and the interaction surface 7241 of the second pole piece 7240.

In addition, the second circulation pole piece 7220 is configured to connect the magnetic flow generating sections 1100, and the interaction surface 7221 may extend from the pole piece disposed between the two magnetic flow generating sections 1100. Further, the coil 1300 may be disposed between the interaction surface 7221 and the pole piece disposed between the two magnetic flow generating sections 1100.

In the case in which the magnetic flow generating sections 1100 define the first arrangement states, as illustrated in FIG. 7A, the N-pole surface and the S-pole surface of the two magnetic flow generating sections 1100 face the first circulation pole piece 7210, and the N-pole surface and the S-pole surface face the second circulation pole piece 7220. In addition, in the case in which the magnetic flow generating sections 1100 define the second arrangement states, the magnetic flow generating sections 1100 are disposed such that the identical magnetic poles face the second circulation pole piece 7220 so that the magnetic flow indicated by the dotted line may be formed, as illustrated in FIG. 7B. In this case, the coil 1300 is disposed on the second circulation pole piece 7220, as illustrated in FIG. 7, such that the coil 1300 may be controlled so that the identical magnetic poles are directed toward the second circulation pole piece 7220 when the magnetic flow generating sections 1100 define the second arrangement states.

Because the control method performed based on the switching of the arrangement state of the magnetic flow generating section 1100 is identical to the control method described with reference to FIGS. 1A to 1D, a detailed description thereof will be omitted.

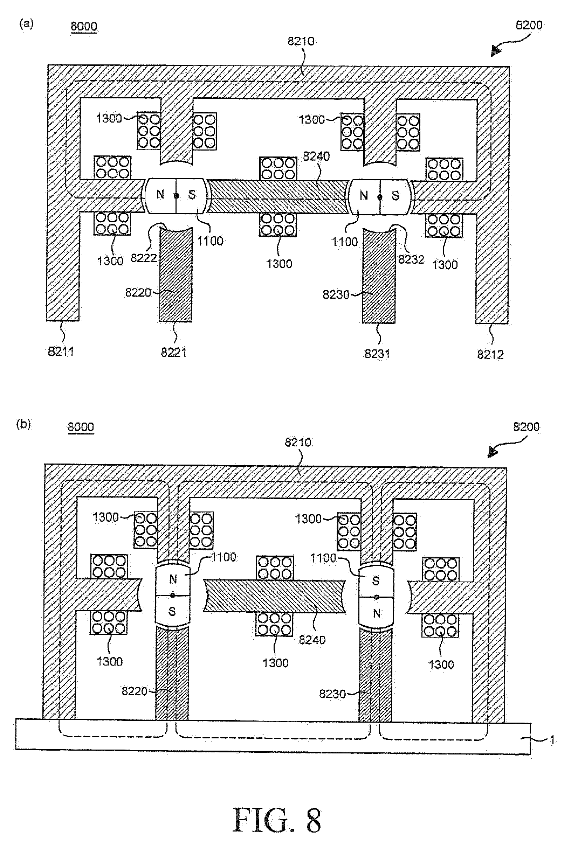

FIG. 8 is a schematic cross-sectional view illustrating a magnetic force control device according to yet another exemplary embodiment of the present invention. Specifically, FIG. 8A illustrates a state in which the magnetic flow generating sections 1100 define the first arrangement states, and FIG. 8B illustrates a state in which the magnetic flow generating sections 1100 define the second arrangement states.

A circulation pole piece 8210 of the magnetic force control device 8000 according to the present exemplary embodiment is characterized by including additional interaction surfaces 8211 and 8212 extending from the circulation pole piece 6210 of the magnetic force control device 6000 in FIG. 6. In addition, because first and second pole pieces 8220 and 8230 are components corresponding to the first and second pole pieces 6220 and 6230 in FIG. 6, respectively, a detailed description thereof will be omitted.

The magnetic force control device 8000 according to the present exemplary embodiment has the additional interaction surfaces 8211 and 8212, such that more stable characteristics may be expected when holding the magnetic body 1.

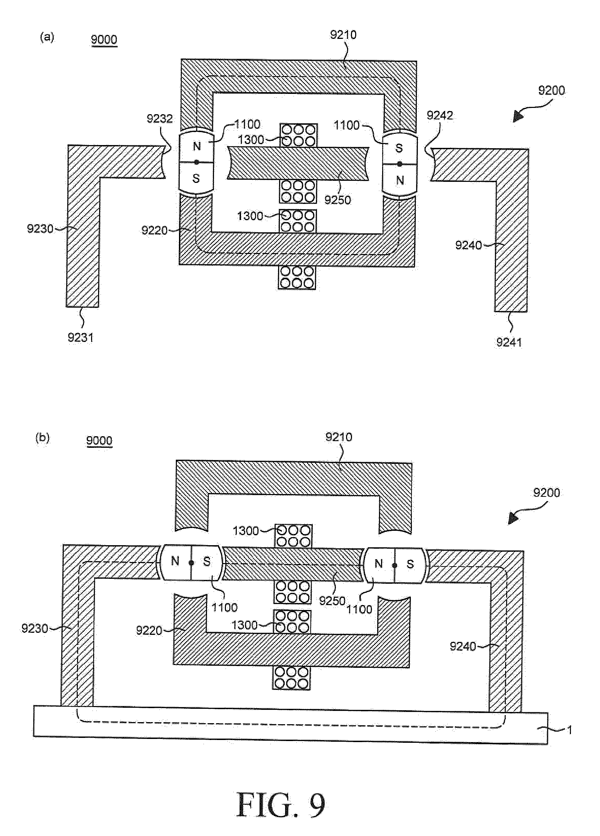

FIG. 9 is a schematic cross-sectional view illustrating a magnetic force control device according to yet another exemplary embodiment of the present invention. Specifically, FIG. 9A illustrates a state in which the magnetic flow generating sections 1100 define the first arrangement states, and FIG. 9B illustrates a state in which the magnetic flow generating sections 1100 define the second arrangement states.

A magnetic force control device 9000 according to the present exemplary embodiment includes at least two magnetic flow generating sections 1100.

A magnetic flow section 9200 includes a first circulation pole piece 9210, a second circulation pole piece 9220, a first pole piece 9230, a second pole piece 9240, and a connecting pole piece 9250.

The first pole piece 9230 has a first surface 9232 that faces the N-pole surface or the S-pole surface of the magnetic flow generating section 1100 in the case in which the magnetic flow generating section 1100 defines the second arrangement state, as illustrated in FIG. 9B. The first surface 9232 is magnetically connected to an interaction surface 9231.

The second pole piece 9240 has a second surface 9242 that faces the N-pole surface or the S-pole surface of the magnetic flow generating section 1100 in the case in which the magnetic flow generating section 1100 defines the second arrangement state, as illustrated in FIG. 9B. The second surface 9242 is magnetically connected to an interaction surface 9241.

The first circulation pole piece 9210 and the second circulation pole piece 9220 are configured to form a magnetic flow path such that the magnetic flow from the magnetic flow generating sections 1100 circulates inside the magnetic force control device in the case in which the magnetic flow generating sections 1100 define the first arrangement states (as illustrated in FIG. 9A).

The connecting pole piece 9250 is disposed between the magnetic flow generating sections 1100 and magnetically connects the magnetic flow generating sections 1100 when the magnetic flow generating sections 1100 define the second arrangement states.

In the case in which the magnetic flow generating sections 1100 define the first arrangement states, as illustrated in FIG. 9A, the N-pole surface and the S-pole surface of the two magnetic flow generating sections 1100 face the first circulation pole piece 9210, and the N-pole surface and the S-pole surface face the second circulation pole piece 9220. In addition, in the case in which the magnetic flow generating sections 1100 define the second arrangement states, the N-pole surface and the S-pole surface are controlled to face the connecting pole piece 9250 so that the magnetic flow indicated by the dotted line may be formed, as illustrated in FIG. 9B.

Because the control method performed based on the switching of the arrangement state of the magnetic flow generating section 1100 is identical to the control method described with reference to FIGS. 1A to 1D, a detailed description thereof will be omitted.

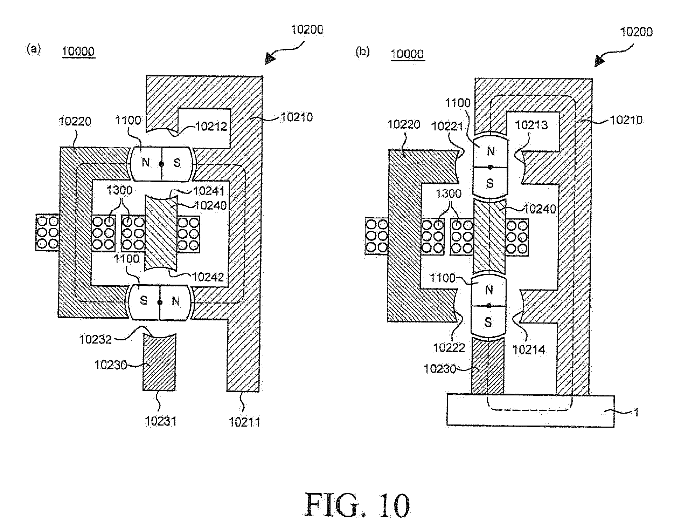

FIG. 10 is a schematic cross-sectional view illustrating a magnetic force control device according to yet another exemplary embodiment of the present invention. Specifically, FIG. 10A illustrates a state in which the magnetic flow generating sections 1100 define the first arrangement states, and FIG. 10B illustrates a state in which the magnetic flow generating sections 1100 define the second arrangement states.

A magnetic force control device 10000 according to the present exemplary embodiment includes at least two magnetic flow generating sections 1100.

A magnetic flow section 10200 includes a pole piece unit 10210, a circulation pole piece 10220, a pole piece 10230, and a connecting pole piece 10240.

The pole piece unit 10210 includes an interaction surface 10211, a first surface 10212, a second surface 10213, and a third surface 10214.

The circulation pole piece 10220 includes a first surface 10221 and a second surface 10222.

The pole piece 10230 includes an interaction surface 10231 and a first surface 10232.

The connecting pole piece 10240 includes a first surface 10241 and a second surface 10242.

As illustrated in FIG. 10A, in the case in which the magnetic flow generating section 1100 defines the first arrangement state, the N-pole surface faces the first surface 10221 of the circulation pole piece 10220, and the S-pole surface faces the second surface 10213 of the pole piece unit 10210. In addition, the S-pole surface faces the second surface 12222 of the circulation pole piece 10220, and the N-pole surface faces the third surface 10214 of the pole piece unit 10210. Therefore, an inner circulation magnetic flow is formed as indicated by the dotted line in FIG. 10A. Of course, the magnetic flow generating sections 1100 may be disposed on the contrary to those illustrated in FIG. 10A.

As illustrated in FIG. 10B, in the case in which the magnetic flow generating section 1100 defines the second arrangement state, the N-pole surface faces the first surface 10212 of the pole piece unit 10210, and the S-pole surface faces the first surface 10241 of the connecting pole piece 10240. In addition, the N-pole surface faces the second surface 10242 of the connecting pole piece 10240, and the S-pole surface faces the first surface 10232 of the pole piece 10230. Therefore, the magnetic flow passing through the magnetic body 1 is formed as indicated by the dotted line in FIG. 10B, such that the magnetic force may be applied to the outside magnetic body 1. Of course, the magnetic flow generating sections 1100 may be disposed on the contrary to those illustrated in FIG. 10B.

Because the control method performed based on the switching of the arrangement state of the magnetic flow generating section 1100 is identical to the control method described with reference to FIGS. 1A to 1D, a detailed description thereof will be omitted.

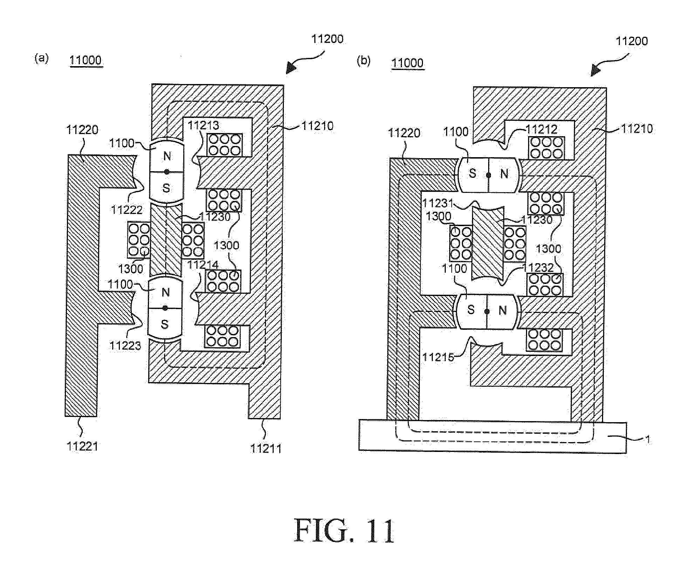

FIG. 11 is a schematic cross-sectional view illustrating a magnetic force control device according to yet another exemplary embodiment of the present invention. Specifically, FIG. 11A illustrates a state in which the magnetic flow generating sections 1100 define the first arrangement states, and FIG. 11B illustrates a state in which the magnetic flow generating sections 1100 define the second arrangement states.

A magnetic force control device 11000 according to the present exemplary embodiment includes at least two magnetic flow generating sections 1100.

A magnetic flow section 11200 includes a first pole piece unit 11210, a second pole piece unit 11220, and a connecting pole piece 11230.

The first pole piece unit 11210 includes an interaction surface 11211, a first surface 11212, a second surface 11213, a third surface 11214, and a fourth surface 11215.

The second pole piece unit 11220 includes an interaction surface 11221, a first surface 11222, and a second surface 11223.

The connecting pole piece 11230 includes a first surface 11231 and a second surface 11232.

As illustrated in FIG. 11A, in the case in which the magnetic flow generating section 1100 defines the first arrangement state, the N-pole surface faces the first surface 11222 of the first pole piece unit 11210, and the S-pole surface faces the first surface 11231 of the connecting pole piece 11230. In addition, the N-pole surface faces the second surface 11232 of the connecting pole piece 11230, and the S-pole surface faces the fourth surface 11215 of the first pole piece unit 11210. Therefore, an inner circulation magnetic flow is formed as indicated by the dotted line in FIG. 11A. Of course, the magnetic flow generating sections 1100 may be disposed on the contrary to those illustrated in FIG. 11A.

As illustrated in FIG. 11B, in the case in which the magnetic flow generating section 1100 defines the second arrangement state, the S-pole surface faces the first surface 11222 of the second pole piece unit 11220, and the N-pole surface faces the second surface 11213 of the first pole piece unit 11210. In addition, the S-pole surface faces the second surface 11223 of the second pole piece unit 11220, and the N-pole surface faces the third surface 11214 of the first pole piece unit 11210. Therefore, the magnetic flow passing through the magnetic body 1 is formed as indicated by the dotted line in FIG. 11B, such that the magnetic force may be applied to the outside magnetic body 1. Of course, the magnetic flow generating sections 1100 may be disposed on the contrary to those illustrated in FIG. 11B.

Because the control method performed based on the switching of the arrangement state of the magnetic flow generating section 1100 is identical to the control method described with reference to FIGS. 1A to 1D, a detailed description thereof will be omitted.

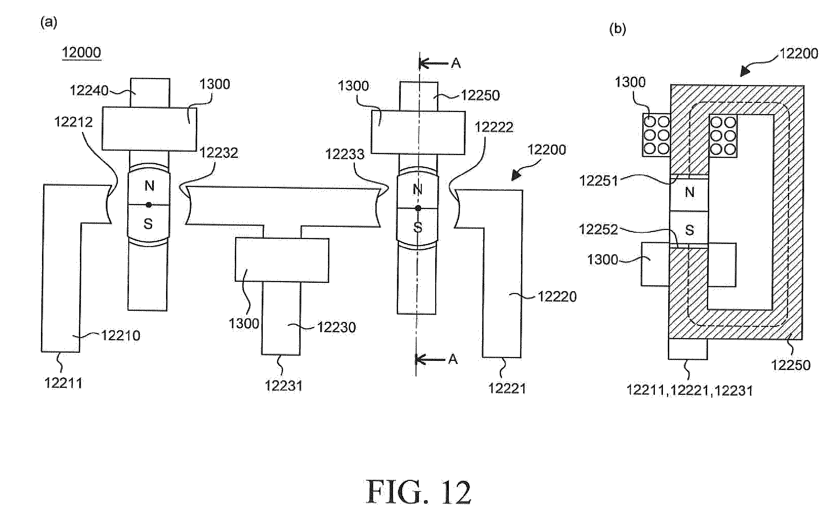

FIG. 12 is a schematic front view and a cross-sectional view illustrating a magnetic force control device according to yet another exemplary embodiment of the present invention.

A magnetic force control device 12000 according to the present exemplary embodiment includes at least two magnetic flow generating sections 1100.

A magnetic flow section 12200 includes a first pole piece 12210, a second pole piece 12220, a connecting pole piece 12230, a first circulation pole piece 12240, and a second circulation pole piece 12250.

The first pole piece 12210 has an interaction surface 12211 and has a first surface 12212 magnetically connected to the interaction surface 12211. In addition, the second pole piece 12220 has an interaction surface 12221 and has a first surface 12222 connected to the interaction surface 12221.

The connecting pole piece 12230 has an interaction surface 12231 and has a first surface 12232 and a second surface 12233 magnetically connected to the interaction surface 12231.

The first circulation pole piece 12240 has a first surface 12241 (not illustrated in the drawings, corresponding to 12251) and a second surface 12242 (not illustrated in the drawings, corresponding to 12252) magnetically connected to each other. The second circulation pole piece 12250 has a first surface 12251 and a second surface 12252 magnetically connected to each other.

As an example illustrated in FIG. 12, in the case in which the magnetic flow generating sections 1100 define the first arrangement states, the N-pole surfaces and the S-pole surfaces of the magnetic flow generating sections 1100 face the first surfaces 12241 and 12251 and the second surfaces 12242 and 12252 of the first circulation pole piece 12240 and the second circulation pole piece 12250, such that the magnetic flow circulates inside the magnetic force control device. Of course, the magnetic flow generating sections 1100 may be disposed on the contrary to those illustrated in FIG. 12.

Although not illustrated in FIG. 12, by controlling the current applied to the coils 1300, for example, the N-pole surfaces of the magnetic flow generating sections 1100 may face the first surface 12232 and the second surface 12233 of the connecting pole piece 12230, and the S-pole surfaces of the magnetic flow generating sections 1100 may face the first surface 12212 of the first pole piece 12210 and the first surface 12222 of the second pole piece 12220, such that the magnetic body may be held by the interaction surfaces 12211, 12231, and 12221. Of course, the magnetic flow generating sections 1100 may be disposed on the contrary to this.

The magnetic force control device 12000 according to the present exemplary embodiment has the configuration made by expanding the magnetic force control device 2000 in FIG. 2, and the configuration will be easily understood from the description with reference to FIG. 2.

Because the control method performed based on the switching of the arrangement state of the magnetic flow generating section 1100 is identical to the control method described with reference to FIGS. 1A to 1D, a detailed description thereof will be omitted.

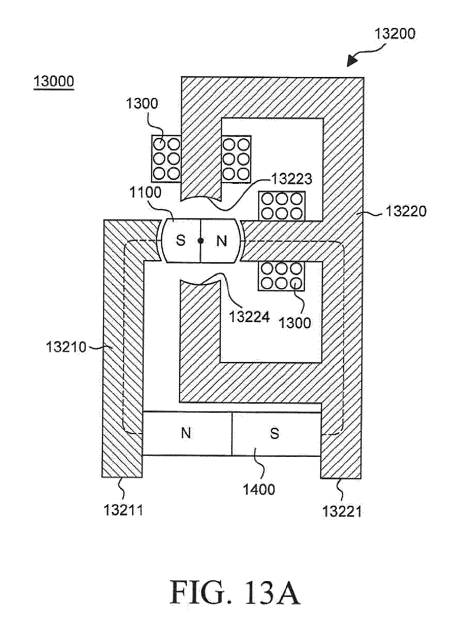

FIGS. 13A to 13F are schematic cross-sectional views illustrating a magnetic force control device according to yet another exemplary embodiment of the present invention.

Referring to FIGS. 13A to 13F, a magnetic force control device 13000 according to the present exemplary embodiment includes a magnetic flow generating section 1100, a magnetic flow section 13200, and coils 1300.

The magnetic flow generating section 1100 is also included in the magnetic force control device 1000 described with reference to FIGS. 1A to 1D, the above-mentioned description will be referenced, and a specific description thereof will be omitted.

A magnetic flow section 13200 includes at least one pole piece made of a magnetic material in which a magnetic flow may be formed, and a main permanent magnet 1400. The magnetic flow section 13200 according to the present exemplary embodiment differs from the magnetic force control devices 1000 to 2000 in that the main permanent magnet 1400 is included.

The magnetic flow section 13200 has one or more interaction surfaces 13211 and 13221, and the interaction surfaces 13211 and 13221 are formed on the pole piece.

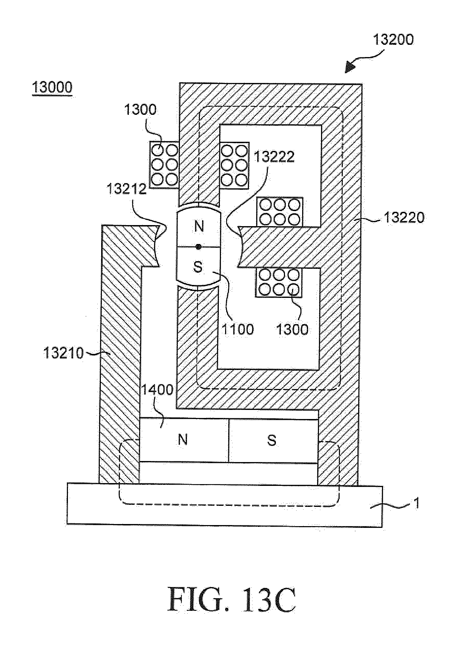

The pole piece and the main permanent magnet 1400 are disposed so that the effect of the magnetic flow from the main permanent magnet 1400 on the interaction surfaces 13211 and 13221 is minimized as a closed loop (indicated by the dotted line) is formed between the magnetic flow generating section 1100 and the main permanent magnet 1400 in the case in which the magnetic flow generating section 1100 defines the first arrangement state, as illustrated in FIG. 13A. The pole piece and the main permanent magnet 1400 are disposed so that the effect of the magnetic flow generating section 1100 on the main permanent magnet 1400 is minimized in the case in which the magnetic flow generating section 1100 defines the second arrangement state, as illustrated in FIG. 13C.

Specifically, the magnetic flow section 13200 has pole pieces including a first pole piece 13210 and a pole piece unit 13220, and the pole pieces is made of a magnetic material such as iron in which a magnetic flow may be formed.

The first pole piece 13210 has an interaction surface 13211, and the interaction surface 13211 is connected to the first surface 13212.

The pole piece unit 13220 has an interaction surface 13221, and the interaction surface 13221 is connected to a first surface 13222, a second surface 13223, and a third surface 13224.

The main permanent magnet 1400 is disposed such that any one of the N pole and the S pole is in contact with the first pole piece 13210, and the other of the N pole and the S pole is in contact with the pole piece unit 13220. The main permanent magnet 1400 is a main permanent magnet configured to provide holding force to the magnetic force control device 13000 and may be disposed in the vicinity of the interaction surfaces 13211 and 13221.

At least one coil 1300 wound around the pole piece. In the present exemplary embodiment, an example in which the coils 1300 are disposed in the vicinity of the first surface 13222 and the second surface 13223 of the pole piece unit 13220 is described. However, a larger number of coils may be disposed.

Meanwhile, as illustrated in FIGS. 13A to 13F, at least one coil 1300 may be disposed on a closed loop formed in the case in which the magnetic flow generating section 1100 defines the first arrangement state, and at least one coil 1300 may be disposed in the internal circulation magnetic path formed in the case in which the magnetic flow generating section 1100 defines the second arrangement state.

The magnetic force control device 13000 according to the present exemplary embodiment changes magnetic characteristics of the interaction surfaces 13211 and 13221 by controlling the switching between the first arrangement state (arrangement state in FIG. 13A) and the second arrangement state (arrangement state in FIG. 13C) of the magnetic flow generating section 1100 by controlling the current applied to the coils 1300. The principle will be described below.

Referring to FIG. 13A, the N-pole surface of the magnetic flow generating section 1100 faces the first surface 13222 of the pole piece unit 13220, and the S-pole surface faces the first surface 13212 of the first pole piece 13210, such that the magnetic flow generating section 1100 may define the first arrangement state. In this case, a closed loop (indicated by the dotted line) including the main permanent magnet 1400, the magnetic flow generating section 1100, and the pole pieces is formed, such that the magnetic flow from the main permanent magnet 1400 is attracted to the magnetic flow generating section 1100. Therefore, the magnetic flow toward the interaction surfaces 13211 and 13221 is minimized.

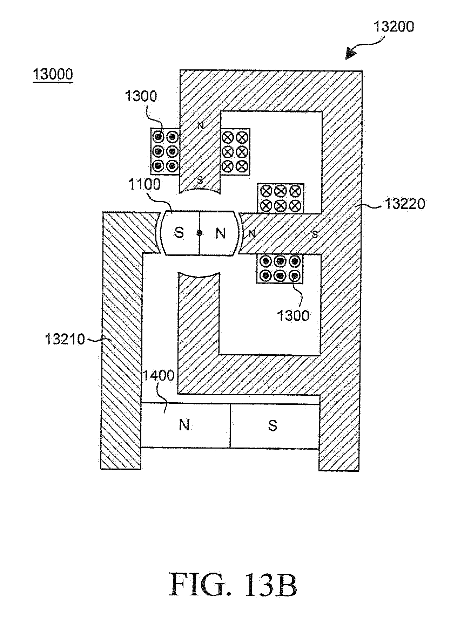

When the current is applied to the coils 1300 as illustrated in FIG. 13B, the magnetic flow indicated by the dotted line in FIG. 13A is weakened, and the first surface 13222 of the pole piece unit 13220 is locally magnetized to have the N pole, such that the magnetic flow generating section 1100 is rotated. In this case, no current may be applied to the coil 1300 in the vicinity of the second surface 13223. However, when the current is applied as illustrated in FIG. 13B, the N pole of the magnetic flow generating section 1100 is attracted to the second surface 13223, such that the arrangement state of the magnetic flow generating section 1100 is switched to the second arrangement state illustrated in FIG. 13C.

Even though no current is applied to the coil 1300 as illustrated in FIG. 13C, the magnetic flow from the magnetic flow generating section 1100 internally circulates inside the pole piece unit 13220 (hereinafter, referred to as an 'internal circulation magnetic path'), such that there is almost no effect on the main permanent magnet 1400. Therefore, the magnetic flow from the main permanent magnet 1400 is directed toward the interaction surfaces 13211 and 13221, such that the magnetic force is generated to the outside magnetic body 1. The magnetic body 1 is held when the magnetic flow is formed in the magnetic body 1.

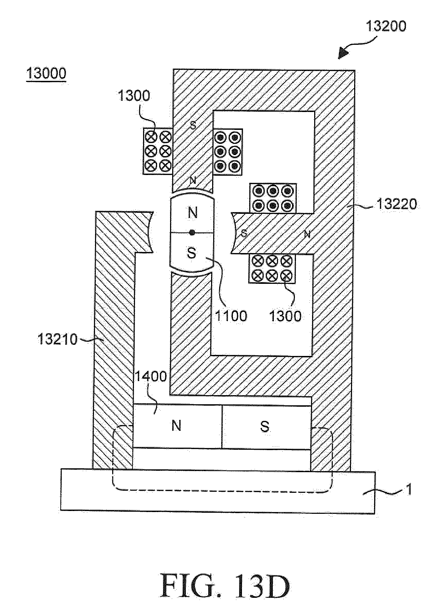

In order to release the magnetic body 1, the current is just applied to the coil 1300, as illustrated in FIG. 13D. With the application of the current to the coil 1300, the magnetic flow as indicated by the upper dotted line is weakened, the second surface 13223 locally has the N pole, and the first surface 13222 locally has the S pole, such that the magnetic flow generating section 1100 rotates and switches to the state illustrated in FIG. 13A. Therefore, the magnetic body I may be released as the magnetic flow passing through the magnetic body 1 is directed toward the magnetic flow generating section 1100, as illustrated in FIG. 13A. Therefore, the released state is maintained even though the current applied to the coil 1300 is cut off.

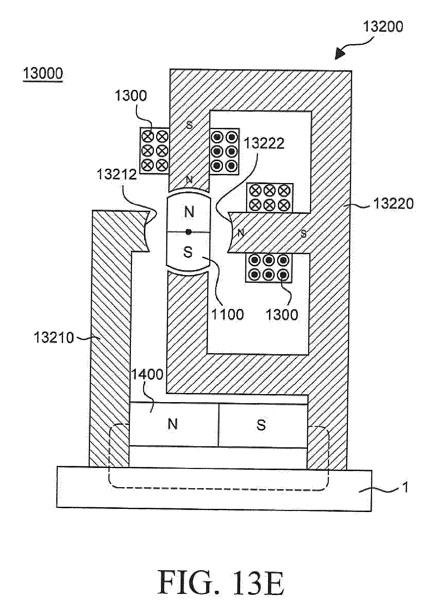

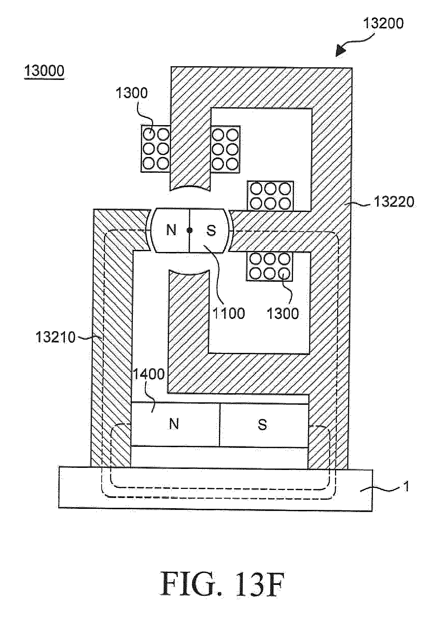

Referring to FIGS. 13E and 13F, the magnetic flow generating section 1100 may be controlled so that a third arrangement state may be implemented in addition to the first arrangement state and the second arrangement state. The third arrangement state will be specifically described below.

As illustrated in FIG. 13E, when the coils 1300 are controlled such that the second surface 13223 of the pole piece unit 13220 has the N pole and the first surface 13222 has the N pole, the magnetic flow generating section 1100 is rotated and disposed as illustrated in FIG. 13F. This state is referred to as the third arrangement state and opposite to the first arrangement state.

As illustrated in FIG. 13F, when the magnetic flow generating section 1100 defines the third arrangement state, the magnetic flow toward the interaction surfaces 13211 and 13221 is increased, such that higher magnetic force may be applied to the outside magnetic body 1.

It is possible to release the magnetic body I by switching from the third arrangement state illustrated in FIG. 13F to the first arrangement state illustrated in FIG. 13A by controlling the current applied to the coil 1300.

In this way, it is possible to induce a change in magnetic characteristics of the interaction surfaces 13211 and 13221 by controlling the magnetic flow direction of the main permanent magnet 1400 by switching the arrangement state of the magnetic flow generating section 1100.

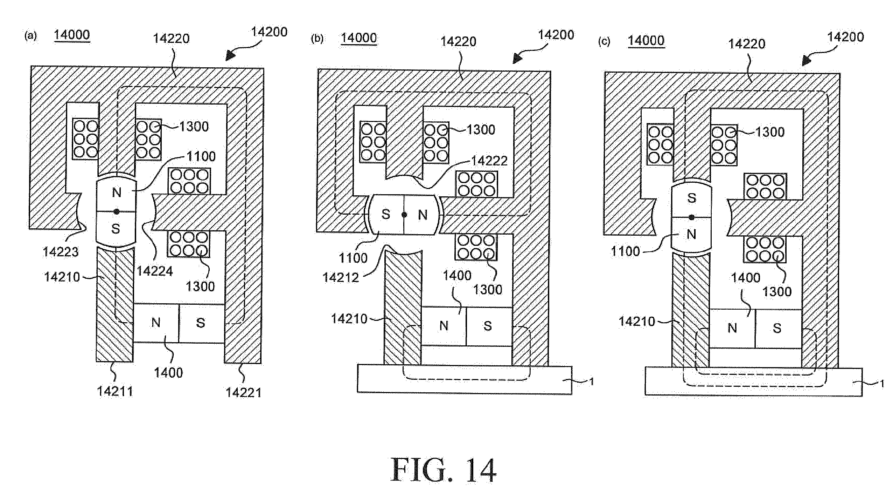

FIG. 14 is a schematic cross-sectional view illustrating a magnetic force control device according to yet another exemplary embodiment of the present invention. Specifically, FIG. 14A illustrates a state in which the magnetic flow generating sections 1100 define the first arrangement states, FIG. 14B illustrates a state in which the magnetic flow generating sections 1100 define the second arrangement states, and FIG. 14C illustrates a state in which the magnetic flow generating sections 1100 define the third arrangement state.

A magnetic force control device 14000 according to the present exemplary embodiment includes a magnetic flow generating section 1100, a magnetic flow section 14200, and coils 1300.

A magnetic flow section 14200 includes a first pole piece 14210, a pole piece unit 14220, and a main permanent magnet 1400.

The first pole piece 14210 has an interaction surface 14211, and the interaction surface 14211 is connected to the first surface 14212.

The pole piece unit 14220 has an interaction surface 14221, and the interaction surface 14221 is connected to a first surface 14222, a second surface 14223, and a third surface 14224.

As illustrated in FIG. 14A, in the case in which the magnetic flow generating section 1100 defines the first arrangement state, the N-pole surface faces the first surface 14222 of the pole piece unit 14220, and the S-pole surface faces the first surface 14212 of the first pole piece 14210.

In addition, as illustrated in FIG. 14B, in the case in which the magnetic flow generating section 1100 defines the second arrangement state, the S-pole surface faces the second surface 14223 of the pole piece unit 14220, and the N-pole surface faces the third surface 14224. Of course, the magnetic flow generating sections 1100 may be disposed on the contrary to those illustrated in FIG. 14B.

In addition, as illustrated in FIG. 14C, in the case in which the magnetic flow generating section 1100 defines the third arrangement state, the S-pole surface faces the first surface 14222 of the pole piece unit 14220, and the N-pole surface faces the first surface 14212 of the first pole piece 14210.

Because the control method performed based on the switching of the arrangement state of the magnetic flow generating section 1100 is identical to the control method described with reference to FIGS. 13A to 13F, a detailed description thereof will be omitted.

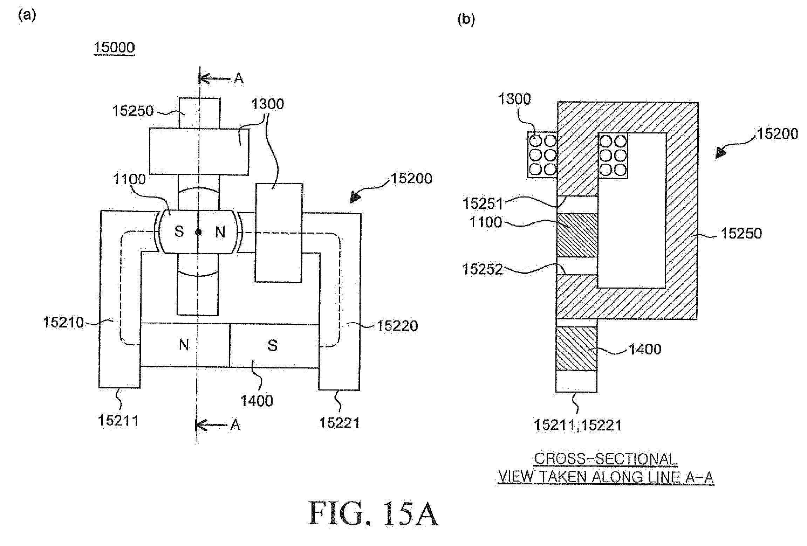

FIG. 15A to 15E are schematic front views and cross-sectional views illustrating a magnetic force control device according to yet another exemplary embodiment of the present invention.

Referring to FIGS. 15A to 15E, a magnetic force control device 15000 according to the present exemplary embodiment includes a magnetic flow generating section 1100, a magnetic flow section 15200, and coils 1300.

A magnetic flow section 15200 according to the present exemplary embodiment includes a first pole piece 15210, a second pole piece 15220, a circulation pole piece 15250, and a main permanent magnet 1400.

The first pole piece 15210 has an interaction surface 15211, and the interaction surface 15211 is connected to the first surface 15212. The second pole piece 15220 has an interaction surface 15221, and the interaction surface 15221 is connected to the first surface 15222.

The circulation pole piece 15250 has a first surface 15251 and a second surface 15252 magnetically connected to each other. The circulation pole piece 15250 is not connected to the first pole piece 15210 and the second pole piece 15220.

Referring to FIG. 15A, in the case in which the magnetic flow generating section 1100 is in the first arrangement state, the magnetic flow from the main permanent magnet 1400 is attracted to the magnetic flow generating section 1100, such that the magnetic body is not held by the interaction surfaces 15211 and 15221.

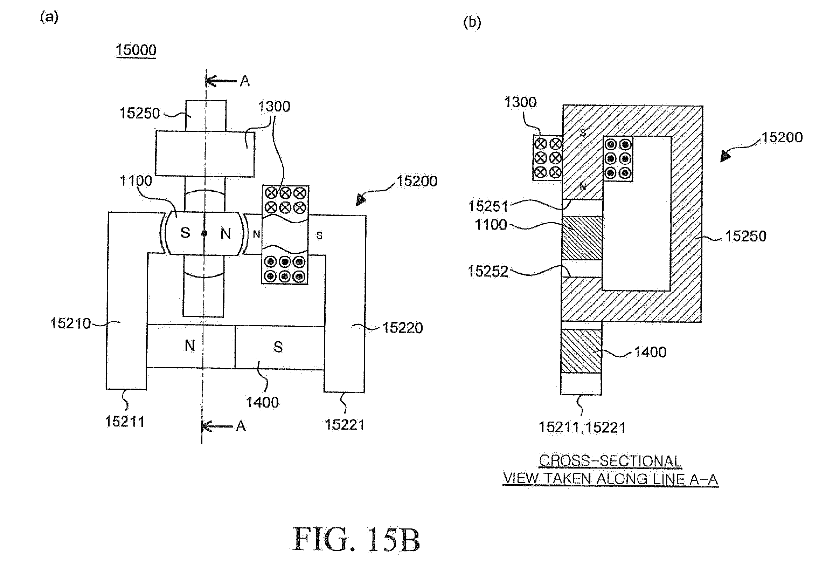

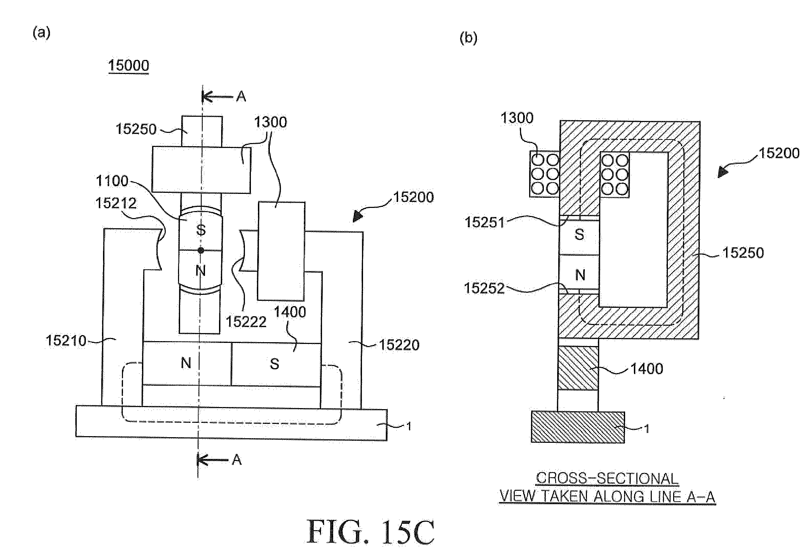

As illustrated in FIG. 15B, when the current is applied to the coil 1300, the magnetic flow indicated by the dotted line in FIG. 15A is weakened, such that the magnetic flow generating section 1100 is rotated, and the magnetic flow generating section 1100 switches to the second arrangement state, as illustrated in FIG. 15C. Of course, as described above, no current may be applied to the coil wound around the circulation pole piece 15250.

As illustrated in FIG. 15C, when the magnetic flow generating section 1100 switches to the second arrangement state, the internal circulation magnetic flow, indicated by the dotted line, is formed by the circulation pole piece 15250. Therefore, the magnetic flow generating section 1100 cannot affect the main permanent magnet 1400. Therefore, the magnetic flow from the main permanent magnet 1400 is directed toward the interaction surfaces 15211 and 15221, such that the magnetic body 1 may be held by the interaction surfaces 15211 and 15221.

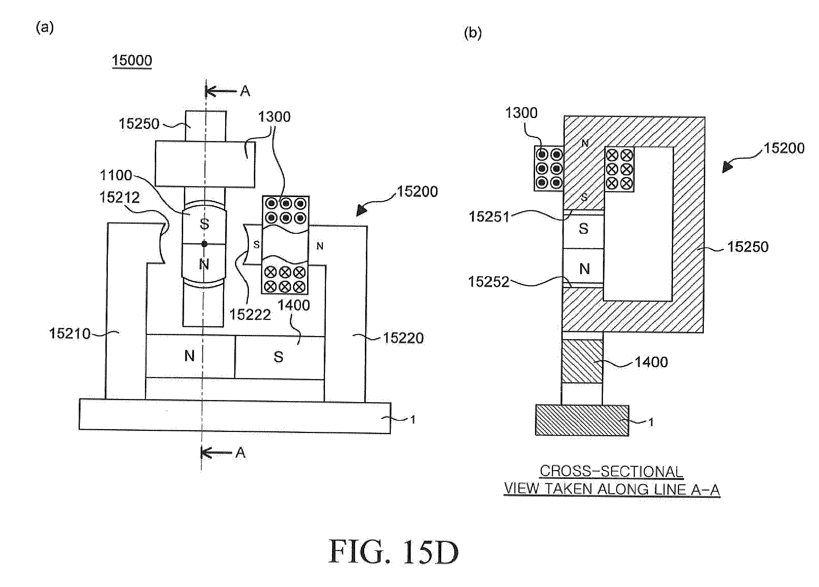

In order to release the magnetic body, the current is just applied to the coils 1300, as illustrated in FIG. 15D. Therefore, the internal circulation magnetic flow indicated by the dotted line in FIG. 15C is weakened, such that the arrangement state of the magnetic flow generating section 1100 is switched to the first arrangement state illustrated in FIG. 15A. For this reason, the magnetic body 1 may be released.

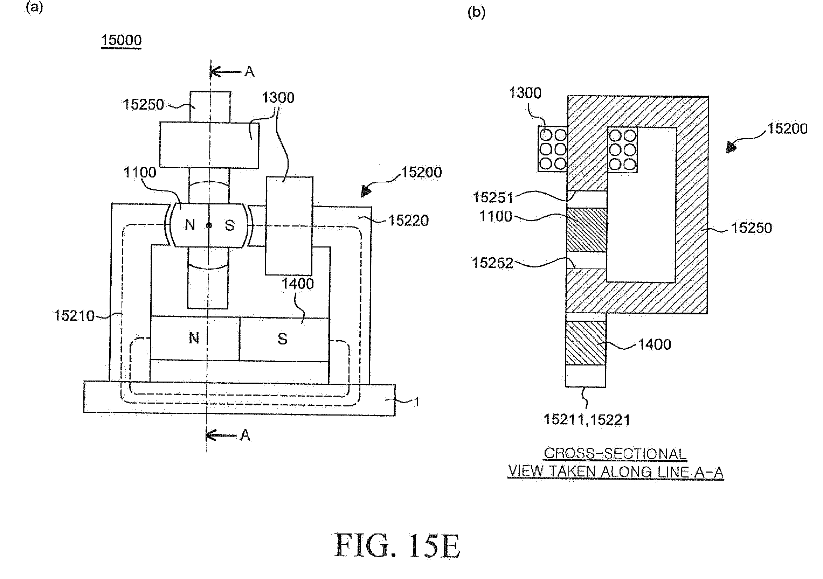

Meanwhile, as illustrated in FIG. 15E, the magnetic flow generating section 1100 may switch to the third arrangement state, such that higher holding force may be applied to the magnetic body 1. Because the controlling of the coil 1300 to switch to the third arrangement state is as described above with reference to FIGS. 13E and 13F, a detailed description thereof will be omitted.

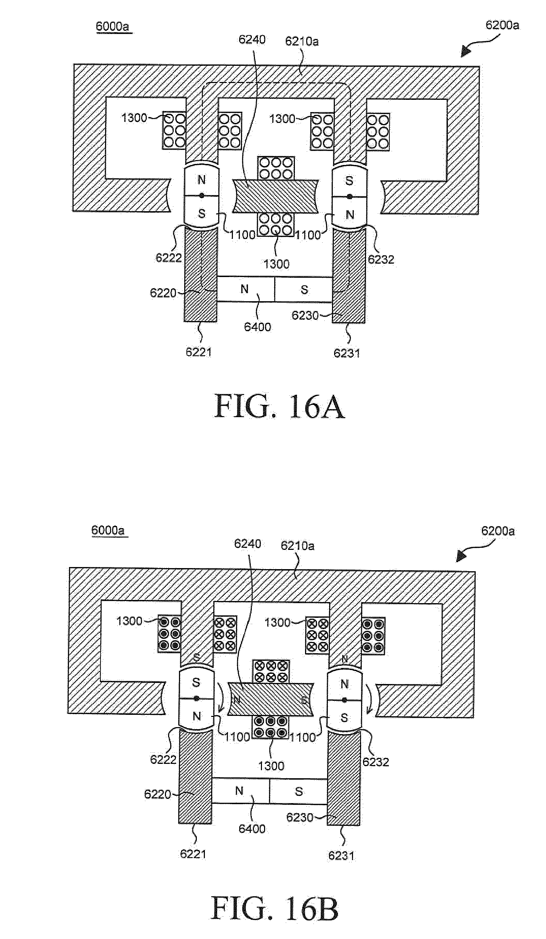

FIGS. 16A to 16F are schematic cross-sectional views illustrating a magnetic force control device according to yet another exemplary embodiment of the present invention.

Referring to FIGS. 16A to 16F, a magnetic force control device 6000a according to the present exemplary embodiment includes at least two magnetic flow generating sections 1100, a magnetic flow section 6200a, and coils 1300.

Here, the other components are identical to those of the magnetic force control device 6000 described with reference to FIG. 6 but different in that the magnetic flow section 6200a includes the main permanent magnet 6400 and some coils 1300 are omitted. Since the main permanent magnet 6400 is included, the magnetic force on the interaction surfaces 6221 and 6231 may be controlled regardless of the presence or absence of the magnetic body 1 which is an attachment object. Because the other configurations are identical to those of the magnetic force control device 6000 in FIG. 6, a repeated description thereof will be omitted.

Any of the N pole and the S pole of the permanent magnet 6400 is in contact with the first pole piece 6220, and the other magnetic pole is in contact with the second pole piece 6230. In the present exemplary embodiment, the example in which the N pole is in contact with the first pole piece 6220 and the S pole is in contact with the second pole piece 6230 is described. However, the S pole may be in contact with the first pole piece 6220 and the N pole may be in contact with the second pole piece 6230.

In comparison with the magnetic force control device 6000 in FIG. 6, the coils 1300 wound around the first and second pole pieces 6220 and 6230 may be omitted, and the coil disposed on an outer surface of the magnetic flow generating section 1100 may be omitted. The disposition of the coils 1300 are illustrative, and the coils may be additionally disposed on the magnetic flow path.

Hereinafter, an operational principle of the magnetic force control device 6000a will be described with reference to FIGS. 16A to 16F sequentially.

First, FIG. 16A illustrates that the magnetic flow generating section 1100 defines the first arrangement state. In the case in which the magnetic flow generating section 1100 defines the first arrangement state, the closed loop (indicated by the dotted line) of the magnetic flow is formed between the magnetic flow generating section 1100 and the main permanent magnet 640, such that the effect of the magnetic flow on the interaction surfaces 6221 and 6231 is minimized. That is, the magnetic body is not attached even though the magnetic body is present outside the interaction surfaces 6221 and 6231. In addition, in this case, the state is maintained even though no current is applied to the coil 1300.

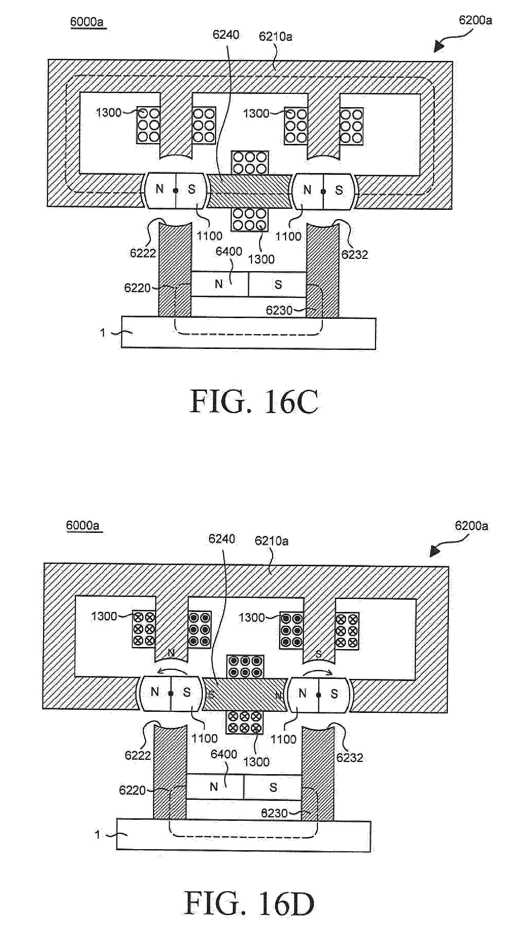

As illustrated in FIG. 16B, when the current is applied to the coil 1300, the magnetic flow indicated by the dotted line in FIG. 16A is weakened, and the magnetic flow generating section 1100 is rotated. Therefore, as illustrated in FIG. 16C, the magnetic flow generating section 1100 may define the second arrangement state. Meanwhile, as illustrated in FIG. 16B, the example in which the current is also applied to the coil 1300 wound around the connecting pole piece 6240 is described. However, no current may be applied to the coil 1300.

As illustrated in FIG. 16C, when the magnetic flow generating section 1100 defines the second arrangement state, the magnetic flow generating section 1100 generates the magnetic flow having the closed loop through the circulation pole piece 6210a, and a magnetic effect cannot be applied to the main permanent magnet 6400. Therefore, the magnetic flow of the main permanent magnet 6400 passes through the magnetic body 1 outside the interaction surfaces 6221 and 6231, such that the magnetic body 1 may be held by the interaction surfaces 6221 and 6231. In this case, the state illustrated in FIG. 16C is maintained even though the current applied to the coils 1300 is cut off. That is, the current is not consumed to maintain the state of holding the magnetic body 1.

Meanwhile, unlike FIG. 16C, the magnetic flow generating sections 1100 may be inverted by 180°, and this arrangement state is included in the second arrangement state. That is, there are two types of second arrangement states, and the coil 1300 wound around the connecting pole piece 6240 may be used to define the particular second arrangement state.

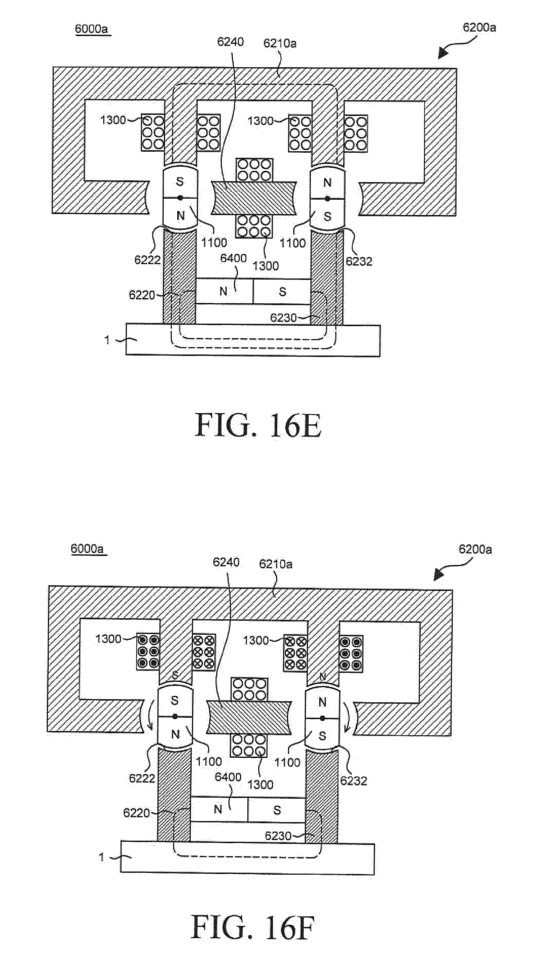

As illustrated in FIG. 16D, when the current is applied to the coil 1300, the magnetic flow generating section 1100 is rotated, such that the third arrangement state illustrated in FIG. 16E may be implemented. The third arrangement state is defined as a state in which the magnetic flow generating section 1100 is disposed in a direction opposite to the direction of the first arrangement state in FIG. 16A.

As illustrated in FIG. 16E, when the magnetic flow generating section 1100 defines the third arrangement state, the magnetic flow from the magnetic flow generating section 1100 additionally passes through the magnetic body 1, such that the magnetic body 1 may be more securely held by the interaction surfaces 6221 and 6231.

In order to switch the third arrangement state to the first arrangement state or the second arrangement state, the current is just applied to the coil 1300, as illustrated in FIG. 16F. The change to the first arrangement state is accompanied with the change to the second arrangement state. Once the arrangement state is changed to the second arrangement state, the current needs to be additionally applied to the coil 1300 wound around the connecting pole piece 6240 to allow the magnetic force control device to come out of the second arrangement state. The arrangement state may be changed to the first arrangement state illustrated in FIG. 16A by controlling the current applied to the coil 1300, and the first arrangement state may be maintained even though the current applied to the coil 1300 is cut off after the change.

The magnetic body 1 may be released by changing the arrangement state to the first arrangement state.

Meanwhile, the change from the first arrangement state to the second arrangement state of the magnetic flow generating section 1100, the change from the second arrangement state to the third arrangement state, and the change from the third arrangement state to the first arrangement state are described as an example with reference to FIGS. 16A to 16F. However, the change in arrangement states may be optionally performed, as necessary.

The change in arrangement states may be performed regardless of whether the magnetic body is present outside the interaction surfaces 6221 and 6231.

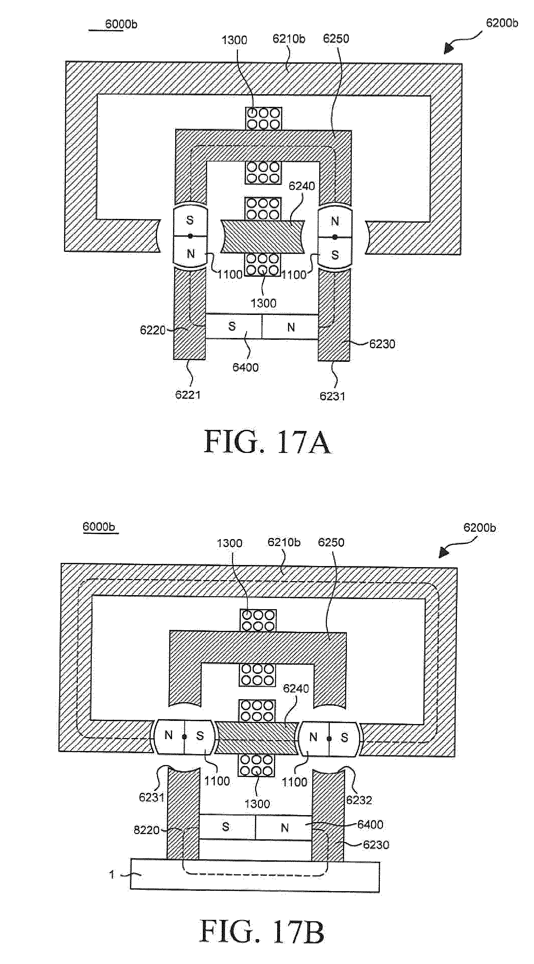

FIG. 17A to 17C are schematic cross-sectional views illustrating a magnetic force control device according to yet another exemplary embodiment of the present invention.

A magnetic force control device 6000b in FIGS. 17A to 17C is a modified configuration of the magnetic force control device 6000a in FIGS. 16A to 16F, and the magnetic flow section 6200b includes first and second circulation pole pieces 6210b and 6250 separated from each other. The disposition of the other pole pieces is identical to that of the magnetic force control device 6000a.

Since the first and second circulation pole pieces 6210b and 6250 separated from each other are provided, it is possible to reduce the number of coils 1300. Because the operational principle is identical to that of the magnetic force control device 6000a in FIGS. 16A to 16F, a detailed description thereof will be omitted.

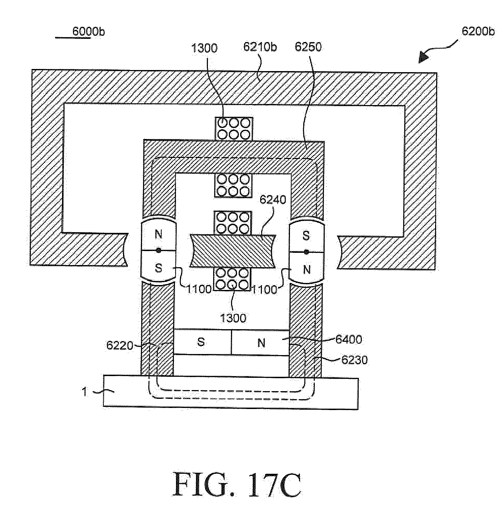

FIG. 17A illustrates a state in which the magnetic flow generating section 1100 defines the first arrangement state, FIG. 17B illustrates a state in which the magnetic flow generating section 1100 defines the second arrangement state, and FIG. 17C illustrates a state in which the magnetic flow generating section 1100 defines the third arrangement state. The change in arrangement states may be performed by controlling the current applied to the coil 1300.

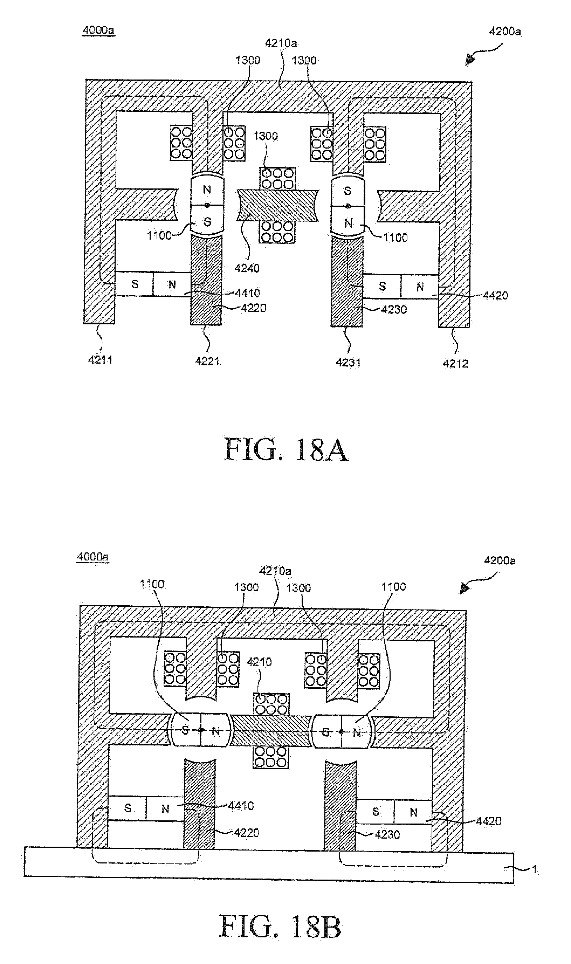

FIGS. 18A to 18C are schematic cross-sectional views illustrating a magnetic force control device according to yet another exemplary embodiment of the present invention.

A magnetic force control device 4000a in FIGS. 18A to 18C is a modified configuration of the magnetic force control device 4000 in FIG. 4, and the magnetic flow section 4200a further includes a first main permanent magnet 4410 and a second main permanent magnet 4420. The other configurations are identical to one another except for a difference in that a connecting pole piece 4240 disposed between the magnetic flow generating sections 1100 is separated.

The first main permanent magnet 4410 is disposed such that the N pole is in contact with the first pole piece 4220, and the S pole is in contact with the pole piece unit 4210a. The second main permanent magnet 4420 is disposed such that the S pole is in contact with the second pole piece 4230 and the N pole is in contact with the pole piece unit 4210a.

However, the first main permanent magnet 4410 may be disposed such that the S pole is in contact with the first pole piece 4220 and the N pole is in contact with the pole piece unit 4210a. In addition, the second main permanent magnet 4420 may be disposed such that the N pole is in contact with the second pole piece 4230 and the S pole is in contact with the pole piece unit 4210a.

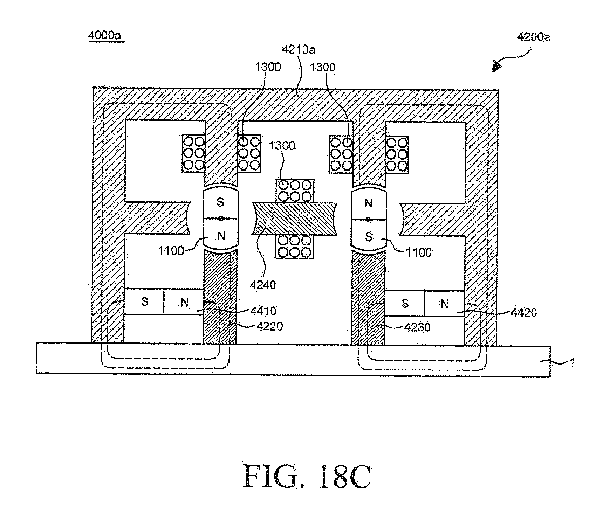

FIG. 18A illustrates a state in which the magnetic flow generating section 1100 defines the first arrangement state, FIG. 18B illustrates a state in which the magnetic flow generating section 1100 defines the second arrangement state, and FIG. 18C illustrates a state in which the magnetic flow generating section 1100 defines the third arrangement state. The change in arrangement states may be performed by controlling the current applied to the coil 1300.

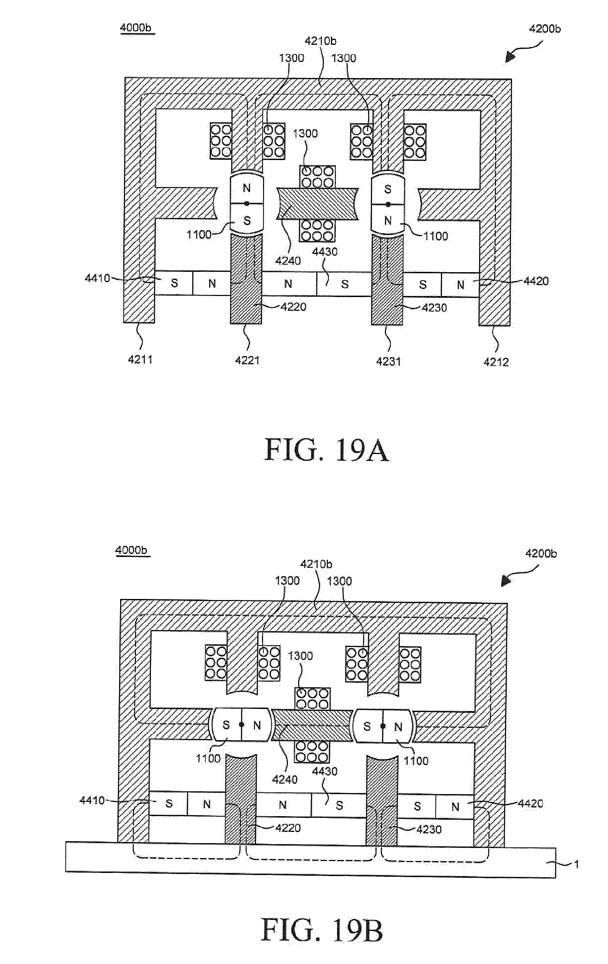

FIGS. 19A to 19C are schematic cross-sectional views illustrating a magnetic force control device according to yet another exemplary embodiment of the present invention.

A magnetic force control device 4000b in FIGS. 19A to 19C is characterized by further including a third main permanent magnet 4430 in addition to the magnetic force control device 4000a in FIGS. 18A to 18C. That is, the magnetic flow section 4200b includes three main permanent magnets 4410, 4420, and 4430.

Specifically, the main permanent magnets 4410, 4420, and 4430 are disposed such that any one of the N pole and the S pole of the first main permanent magnet 4410 and any one of the N pole and the S pole of the third main permanent magnet 4430 are in contact with the first pole piece 4220, and the other magnetic pole of the second main permanent magnet 4420 and the other magnetic pole of the third main permanent magnet 4430 are in contact with the second pole piece 4230. In the present exemplary embodiment, the example in which the N pole of the first main permanent magnet 4410 and the N pole of the third main permanent magnet 4430 are in contact with the first pole piece 4220 and the S pole of the second main permanent magnet 4420 and the S pole of the third main permanent magnet 4430 are in contact with the second pole piece 4230 is described.

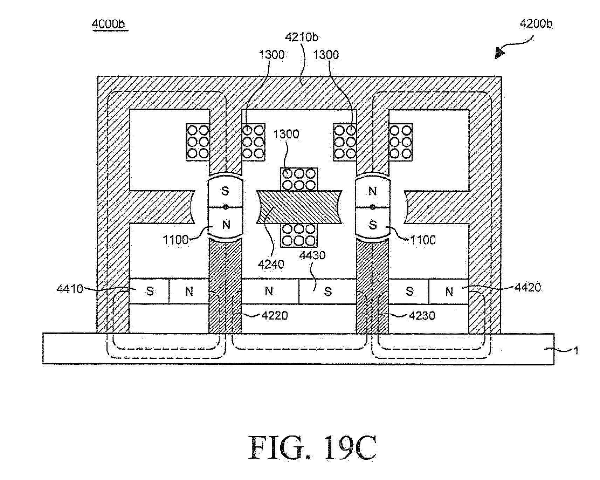

FIG. 19A illustrates a state in which the magnetic flow generating section 1100 defines the first arrangement state, FIG. 19B illustrates a state in which the magnetic flow generating section 1100 defines the second arrangement state, and FIG. 19C illustrates a state in which the magnetic flow generating section 1100 defines the third arrangement state. The change in arrangement states may be performed by controlling the current applied to the coil 1300.

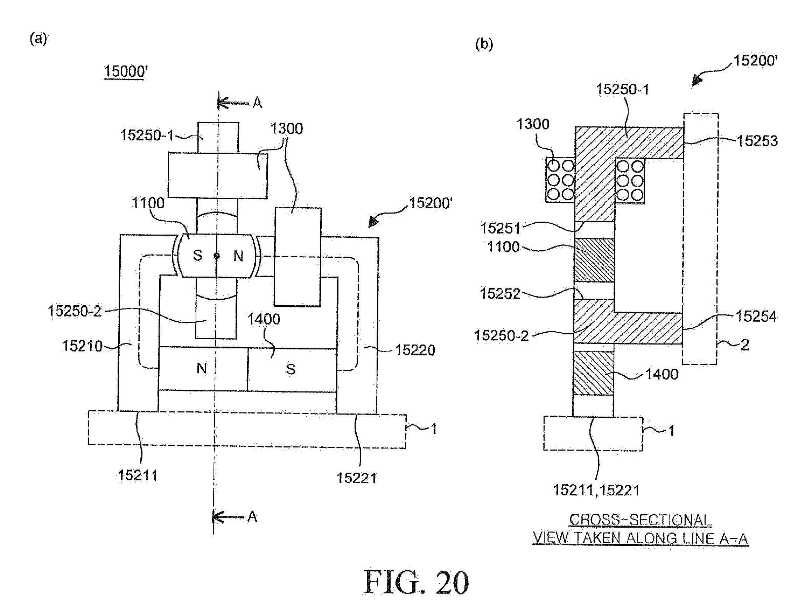

FIG. 20 is a schematic front view and a cross-sectional view illustrating a magnetic force control device according to yet another exemplary embodiment of the present invention.

A magnetic force control device 15000' in FIG. 20 includes a magnetic flow section 15200' modified from the magnetic force control device 15000 in FIGS. 15A to 15E, and the magnetic flow section 15200' has a third pole piece 15250-1 and a fourth pole piece 15250-2.

The third pole piece 15250-1 and the fourth pole piece 15250-2 are formed by dividing the circulation pole piece 15250 in FIGS. 15A to 15E into two members, and therefore, interaction surfaces 15253 and 15254 are formed.

In other words, the first to fourth pole pieces 15210, 15220, 15250-1, and 15250-2 have the interaction surfaces 15211, 15221, 15253, and 15254, respectively, and are made of a magnetic material in which a magnetic flow may be formed. The main permanent magnet 1400 is disposed such that any one of the N pole and the S pole is in contact with the first pole piece 15210 and the other magnetic pole is in contact with the second pole piece 15220.

The first pole piece 15210 and the second pole piece 15220 are disposed to be magnetically connected by the magnetic flow generating section 1100 in the case in which the magnetic flow generating section 1100 is in the first arrangement state, as illustrated in FIG. 20. The third pole piece 15250-1 and the fourth pole piece 15250-2 are disposed to be magnetically connected by the magnetic flow generating section 1100 when the magnetic flow generating section 1100 is in the second arrangement state (not illustrated in FIG. 20).

The coils 1300 are disposed to be wound around at least one of the first pole piece 15210 and the second pole piece 15220 and wound around at least one of the third pole piece 15250-1 and the fourth pole piece 15250-2.

The magnetic force control device 15000' according to the present exemplary embodiment is characterized by including additional interaction surfaces 15253 and 15254 capable of holding an additional magnetic body 2 in addition to the interaction surfaces 15211 and 15221 capable of holding the magnetic body 1. Because the operational principle has been described with reference to FIGS. 15A to 15E, a repeated description thereof will be omitted.

The magnetic body 1 and the magnetic body 2 are controlled to be held or released simultaneously.

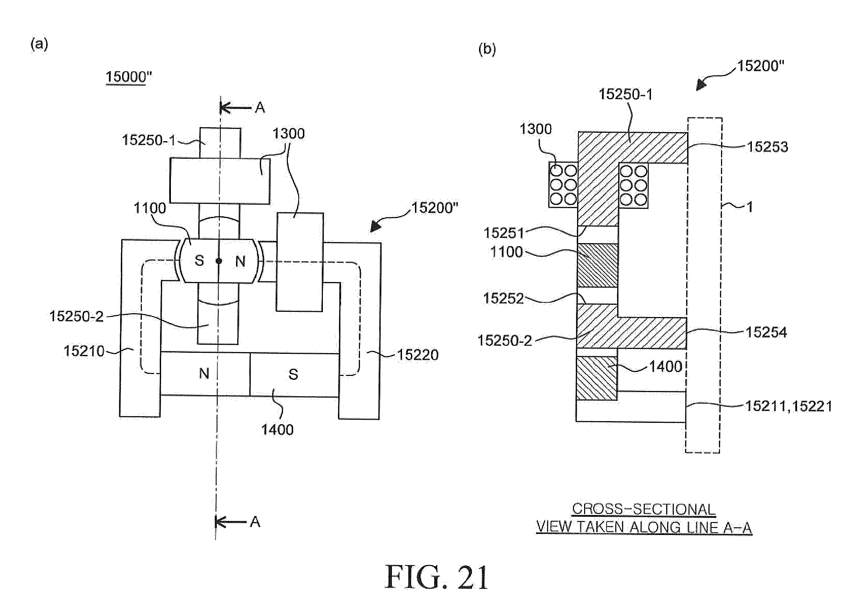

FIG. 21 is a schematic front view and a cross-sectional view illustrating a magnetic force control device according to yet another exemplary embodiment of the present invention.

A magnetic force control device 15000" in FIG. 21 includes a magnetic flow section 15200" modified from the magnetic force control device 15000' in FIG. 20, and the magnetic flow section 15200" is formed such that the interaction surfaces 15211 and 15221, together with the interaction surfaces 15253 and 15254, may hold one magnetic body 1.

The first pole piece 15210' and the second pole piece 15220' are bent by 90°, such that the interaction surface 15211 and 15221 may be disposed at desired positions. In this way, the disposition of the interaction surfaces 15211, 15221, 15253, and 15254 may be freely modified in accordance with a shape or the like of the outside magnetic body that affects the interaction surfaces.

The magnetic force control device 15000" in FIG. 21 may be manufactured to have a thin thickness, such that the magnetic force control device 15000" may be usefully utilized when the magnetic force control device 15000" needs to be thin.

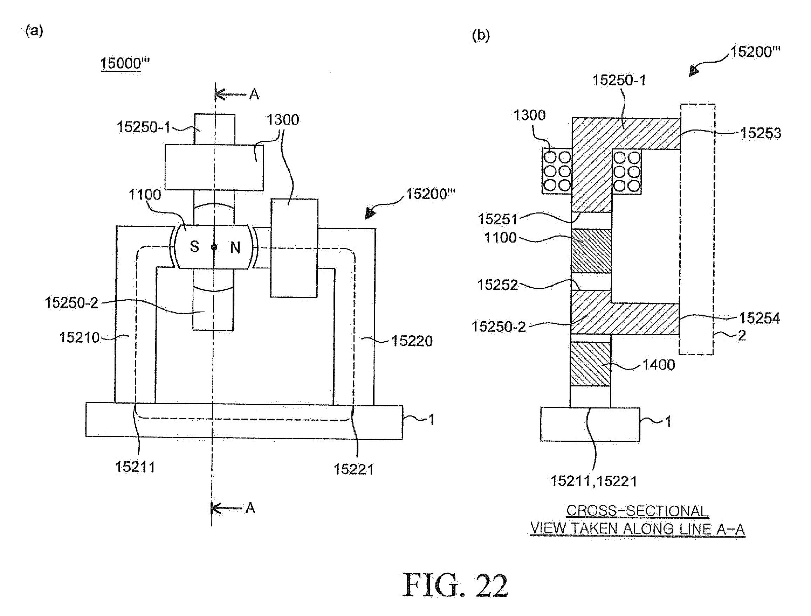

FIG. 22 is a schematic front view and a cross-sectional view illustrating a magnetic force control device according to yet another exemplary embodiment of the present invention.

A magnetic force control device 15000'" in FIG. 22 includes a magnetic flow section 15200'" modified from the magnetic force control device 15000' in FIG. 20, and the magnetic flow section 15200'" is characterized in that the main permanent magnet is omitted.

Unlike the magnetic force control device 15000', the magnetic force control device 15000'" according to the present exemplary embodiment is configured to hold any one of the two magnetic bodies 1 and 2 and to release the other magnetic body. In the arrangement state of the magnetic flow generating section 1100 illustrated in FIG. 22, the magnetic force of the magnetic flow generating section 1100 affects the interaction surfaces 15211 and 15221 but does not affect the interaction surfaces 15253 and 15254. Therefore, the magnetic body 1 is held by the interaction surfaces 15211 and 15221, and the magnetic body 2 is released from the interaction surfaces 15253 and 15254.

In contrast, by changing the arrangement state of the magnetic flow generating section 1100, the magnetic body 1 is released from the interaction surfaces 15211 and 15221, and the magnetic body 2 is held by the interaction surfaces 15253 and 15254.

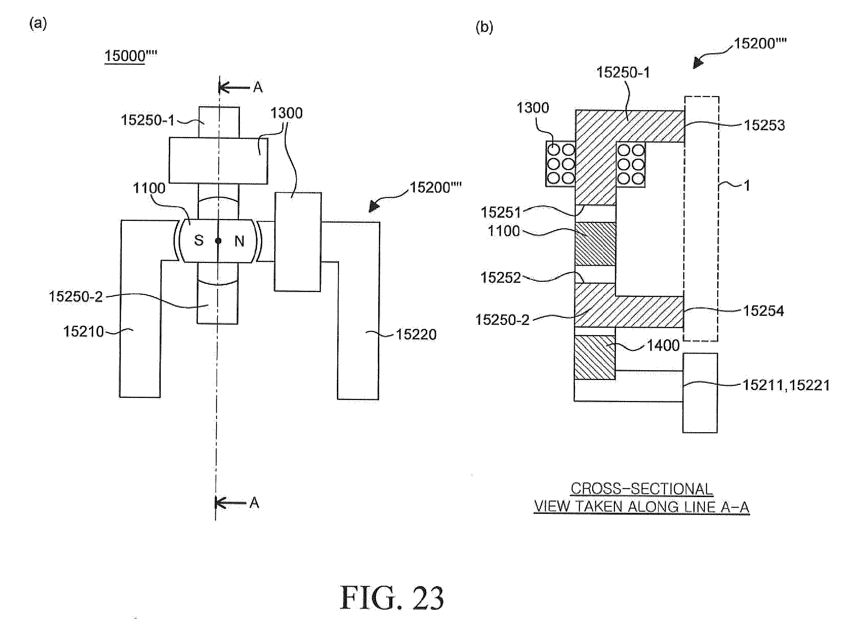

FIG. 23 is a schematic front view and a cross-sectional view illustrating a magnetic force control device according to yet another exemplary embodiment of the present invention.

A magnetic force control device 15000"" in FIG. 23 includes a magnetic flow section 15200"" modified from the magnetic force control device 15000" in FIG. 21, and the magnetic flow section 15200"" is characterized in that the main permanent magnet is omitted.

The magnetic force control device 15000"" according to the present exemplary embodiment is characterized in that interaction surfaces 15211, 15221, 15253, and 15254 are disposed to hold any one of the magnetic bodies 1 and 2 disposed in parallel and to release the other of the magnetic bodies 1 and 2.

Meanwhile, the above-mentioned magnetic flow generating section 1100 may be configured to be mechanically fixed in the first arrangement state or the second arrangement state (or the third arrangement state). That is, after the arrangement state is changed to the first arrangement state and the second arrangement state (or the third arrangement state) by the coils 1300, the magnetic flow generating section 1100 may be fixed to maintain the arrangement state. The fixing of the magnetic flow generating section 1100 may be released only when the arrangement states are changed. With this configuration, an inadvertent rotation of the magnetic flow generating section 1100 is prevented, such that the state of holding or releasing an object may be more stably maintained.

While the exemplary embodiments of the present invention have been described with reference to the accompanying drawings, those skilled in the art will understand that the present invention may be carried out in any other specific form without changing the technical spirit or an essential feature thereof. Therefore, it should be understood that the above-described exemplary embodiments are illustrative in all aspects and do not limit the present application.

### [Industrial Applicability]

The magnetic force control device and the magnetic body holding device using the same according to the present exemplary embodiment may be used for mechanical device processing systems such as mold clamps, mold clamps for press devices, or chucks for machine tools.

## Claims

1. A magnetic force control device comprising:
a magnetic flow generating section configured to be freely rotatable to at least define a first arrangement state and a second arrangement state and comprising a permanent magnet;
a magnetic flow section having at least one interaction surface and comprising at least one pole piece made of a magnetic material in which a magnetic flow is formed therein, the pole piece is disposed such that an effect of a magnetic flow from the magnetic flow generating section on the interaction surface is minimized when the magnetic flow generating section defines the first arrangement state, and the effect of the magnetic flow from the magnetic flow generating section on the interaction surface is maximized when the magnetic flow generating section defines the second arrangement state; and
at least one coil wound around the pole piece,
wherein magnetic characteristics of the interaction surface are changed by controlling the switching between the first arrangement state and the second arrangement state of the magnetic flow generating section by controlling a current applied to the coil.

2. The magnetic force control device of claim 1, wherein the two interaction surfaces are provided, and the magnetic flow section is configured such that any one of an N-pole surface and an S-pole surface of the magnetic flow generating section faces a first surface connected to any one of the interaction surfaces and the other surface of the magnetic flow generating section faces a second surface connected to the other of the interaction surfaces when the magnetic flow generating section defines the second arrangement state.

3. The magnetic force control device of claim 2, wherein at least one of the N-pole surface and the S-pole surface of the magnetic flow generating section faces at least one separate pole piece when the magnetic flow generating section defines the first arrangement state.

4. The magnetic force control device of claim 1, wherein the magnetic flow section is configured such that a magnetic flow path in which the magnetic flow from the permanent magnet circulates therein is formed when the magnetic flow generating section defines the first arrangement state.

5. The magnetic force control device of claim 4, wherein the two interaction surfaces are provided, the magnetic flow section is configured such that any one of an N-pole surface and an S-pole surface of the magnetic flow generating section faces a first surface connected to any one of the interaction surfaces and the other surface of the magnetic flow generating section faces a second surface connected to the other of the interaction surfaces when the magnetic flow generating section defines the second arrangement state, and the magnetic flow section is configured such that any one of the N-pole surface and the S-pole surface of the magnetic flow generating section faces a third surface, the other surface of the magnetic flow generating section faces a fourth surface, and the third surface and the fourth surface are magnetically connected when the magnetic flow generating section defines the first arrangement state.

6. The magnetic force control device of claim 5, wherein at least one of the coils is wound around the pole piece connected to the first surface and the pole piece connected to the second surface, and at least one of the coils is wound around the pole piece connected to the third surface and the fourth surface.

7. The magnetic force control device of claim 1, wherein the pole piece is disposed such that the first arrangement state and the second arrangement state are switched as the magnetic flow generating section rotates by 90°.

8. The magnetic force control device of claim 5, wherein the pole piece is disposed such that the first surface and the second surface are not connected to the third surface and the fourth surface.

9. The magnetic force control device of claim 5, wherein the pole piece is disposed such that any one of the first surface and the second surface is connected to the third surface and the fourth surface and the other of the first surface and the second surface is not connected to the third surface and the fourth surface.

10. The magnetic force control device of claim 4, wherein at least two magnetic flow generating sections are provided, and the magnetic flow section is configured such that magnetic flow paths are formed such that the magnetic flow from the permanent magnet circulates therein and the magnetic flow paths overlap each other at some of the pole pieces when all the magnetic flow generating sections define the first arrangement states.

11. The magnetic force control device of claim 4, wherein at least two magnetic flow generating sections are provided, the magnetic flow section is configured such that magnetic flow paths are formed such that the magnetic flow from the permanent magnet circulates therein and the magnetic flow paths are not overlap each other when all the magnetic flow generating sections define the first arrangement states, and the magnetic flow section is configured such that one of the magnetized interaction surfaces is shared by all the magnetic flow generating sections when all the magnetic flow generating sections define the second arrangement states.

12. The magnetic force control device of claim 1, wherein at least two magnetic flow generating sections are provided, the magnetic flow section comprises a connecting pole piece interposed between the magnetic flow generating sections, and a circulation pole piece configured to form, together with the connecting pole piece and the magnetic flow generating sections, a magnetic flow path such that the magnetic flow from the permanent magnets circulates therein when the magnetic flow generating sections define the first arrangement states, and the magnetic flow section includes at least two pole pieces having the interaction surfaces connected to the N-pole surface or the S-pole surface of the magnetic flow generating sections when the magnetic flow generating sections define the second arrangement states.

13. The magnetic force control device of claim 1, wherein the magnetic flow generating section comprises:
the permanent magnet;
an N-pole piece configured to be in contact with an N pole of the permanent magnet and made of a magnetic material in which a magnetic flow is formed therein; and
an S-pole piece configured to be in contact with an S pole of the permanent magnet and made of a magnetic material in which a magnetic flow is formed therein, and the magnetic flow from the permanent magnet is transferred to the magnetic flow section through the N-pole piece and the S-pole piece.

14. The magnetic force control device of claim 1, wherein the magnetic flow generating section is configured only by the permanent magnet.

15. A magnetic force control device comprising:
a magnetic flow generating section configured to be freely rotatable to at least define a first arrangement state and a second arrangement state and comprising a permanent magnet;
a magnetic flow section having at least one interaction surface and comprising a main permanent magnet and at least one pole piece made of a magnetic material in which a magnetic flow is formed therein, the pole piece and the main permanent magnet being disposed such that an effect of a magnetic flow from the main permanent magnet on the interaction surface is minimized as a closed loop is formed between the magnetic flow generating section and the main permanent magnet when the magnetic flow generating section defines the first arrangement state and the effect of the magnetic flow generating section on the main permanent magnet is minimized when the magnetic flow generating section defines the second arrangement state; and
at least one coil wound around the pole piece,
wherein magnetic characteristics of the interaction surface are changed by controlling the switching between the first arrangement state and the second arrangement state of the magnetic flow generating section by controlling a current applied to the coil.

16. The magnetic force control device of claim 15, wherein the pole piece is disposed such that an internal circulation magnetic path is formed when the magnetic flow generating section defines the second arrangement state.

17. The magnetic force control device of claim 16, wherein at least one coil is disposed on the closed loop formed when the magnetic flow generating section defines the first arrangement state, and at least one coil is disposed on the internal circulation magnetic path formed when the magnetic flow generating section defines the second arrangement state.

18. The magnetic force control device of claim 15, wherein the magnetic flow generating section is configured to define a third arrangement state in a direction opposite to a direction of the first arrangement state by controlling the current applied to the coil.

19. The magnetic force control device of claim 15, wherein the magnetic flow section comprises:
a first pole piece having an interaction surface and made of a magnetic material in which a magnetic flow is formed therein;
a second pole piece having an interaction surface and made of a magnetic material in which a magnetic flow is formed therein;
a third pole piece having an interaction surface and made of a magnetic material in which a magnetic flow is formed therein; and
a fourth pole piece having an interaction surface and made of a magnetic material in which a magnetic flow is formed therein, the main permanent magnet is disposed such that any one of an N pole and an S pole is in contact with the first pole piece and the other magnetic pole is in contact with the second pole piece, the first pole piece and the second pole piece are disposed to be magnetically connected by the magnetic flow generating section when the magnetic flow generating section is in the first arrangement state, the third pole piece and the fourth pole piece are disposed to be magnetically connected by the magnetic flow generating section when the magnetic flow generating section is in the second arrangement state, and the coils are disposed to be wound around at least one of the first pole piece and the second pole piece and wound around at least one of the third pole piece and the fourth pole piece.

20. A magnetic body holding device comprising the configuration of the magnetic force control device according to claim 1 or 15.
